# EUROPEAN PATENT SPECIFICATION

(11) **EP 4 035 866 B1**
(45) Date of publication and mention of the grant of the patent: **25.09.2024**
(21) Application number: 22153550.3
(22) Date of filing: 27.01.2022
(51) Int. Cl.: B29C 45/76, B29C 45/40

(54) **INJECTION MOLDING MACHINE**
SPRITZGIESSMASCHINE
MACHINE DE MOULAGE À INJECTION

(30) Priority: 29.01.2021 JP 2021013868
(43) Date of publication of application: 03.08.2022
(73) Proprietor: SUMITOMO HEAVY INDUSTRIES, LTD., Tokyo 141-6025 (JP)
(72) Inventor: HIRANO, Tomohiro, 731-1, Naganumahara-cho, Inage-ku, Chiba-shi, Chiba, 263-0001, (JP); KURAHASHI, Seigo, 731-1, Naganumahara-cho, Inage-ku, Chiba-shi, Chiba, 263-0001, (JP); SUZUKI, Keisuke, 731-1, Naganumahara-cho, Inage-ku, Chiba-shi, Chiba, 263-0001, (JP)
(74) Representative: Louis Pöhlau Lohrentz

(56) References cited:
- EP-A1- 0 656 250
- JP-A- 2020 044 729
- JP-A- 2020 082 700

## Description

### BACKGROUND OF THE INVENTION

### Field of the Invention

The present invention relates to an injection molding machine.

### Description of Related Art

In the related art, in an injection molding machine, a technique for ejecting a molding product from a mold unit has been proposed. For example, in an injection molding machine disclosed in Japanese Unexamined Patent Publication No. 2008-114532, two ejector units are provided to correspond to each of two mold units so that the two ejector units can perform drive control independently of each other. Then, the ejector unit corresponding to each of the mold units performs ejection control of an ejector rod, thereby unloading the molding product. As a specific unloading method, when mold opening is completed, a product unloading robot moves an arm so that two molding product chuck portions are disposed to face each other in two molding products respectively placed on the two mold units . Thereafter, the two ejector units perform an ejection operation of the molding product at the same time . In this manner, the molding products ejected from the respective mold units are respectively chucked by the molding product chuck portions. The two molding products can be unloaded at the same time in this way. Accordingly, a time for unloading the molding product can be shortened.

In addition, when a plurality of the molding product chuck portions are provided in one arm, a distance between the two molding product chuck portions may be shorter than a distance between the two molding products respectively placed on the two mold units in some cases. In this case, the ejector unit is controlled to perform the ejection operation on one of the molding products to be chucked by one of the molding product chuck portions . Thereafter, the arm having the molding product chuck portion is moved, and thereafter, the ejector unit performs the ejection operation on the other molding product to be chucked by the other molding product chuck portion.

In the injection molding machine disclosed in Japanese Unexamined Patent Publication No. 2008-114532, it is possible to select a mode in which the two ejector units are operated at the same time and a mode in which the two ejector units are operated with a time difference. European Patent Publication No. 0656250 discloses a gate-cut and product-ejection control apparatus and method for use in an injection molding machine in which a melted substance is injected into metallic molds so as to produce a molded product. Japanese Unexamined Patent Publication No. 2020-044729 discloses an injection molding machine in which the same molding product is ejected by a first ejector unit and a second ejector unit. Japanese Unexamined Patent Publication No. 2020-082700 discloses an injection molding machine including a first molding section for molding a first molding product and a second molding section for molding a second molding product including the first molding product as a part thereof, in which an ejection position of a movable portion of the first molding section is different from an ejection position of a movable portion of the second molding section.

### SUMMARY OF THE INVENTION

Japanese Unexamined Patent Publication No. 2008-114532 discloses a technique in which ejection control is performed for a plurality of molding products placed on each of a plurality of mold units, and does not consider a technique in which a plurality of ejector units perform the ejection control on one ejector plate for the same molding product. Even when the plurality of ejector units perform the ejection operation for the same molding product at the same time, when conditions respectively set for the plurality of ejector units are different from each other, ejection operations of the plurality of ejector units do not coincide with each other. When the ejection operations of the plurality of ejector units do not coincide with each other, there is a problem in that a load applied to the molding product or the mold unit increases. For example, when the ejection operation is performed on one ejector plate by using the plurality of ejector units in order to unload an elongated molding product, and when there is a difference in the ejection operations of the plurality of ejector units, there is a possibility that the molding product may be damaged, or there is a possibility that the mold unit may be damaged due to the load applied to the mold unit from an ejector pin penetrating the mold unit.

One aspect of the present invention is to provide a technique for reducing a load applied to a molding product or a mold unit when a plurality of ejector units perform an ejection operation on the same molding product via the mold unit.

According to an aspect of the present invention, there is provided an injection molding machine including a first ejector unit, a second ejector unit, and a control device. The first ejector unit ejects a molding product molded in cavity spaces formed between a first die and a second die, from the second die. The second ejector unit ejects the molding product molded in the cavity spaces formed between the first die and the second die, from the second die. The control device controls the first ejector unit, and controls the second ejector unit. The control device includes a first setting unit, a second setting unit, a control unit, and a display processing unit. The first setting unit sets a first ejection condition for controlling the first ejector unit. The second setting unit sets a second ejection condition for controlling the second ejector unit. The control unit controls the first ejector unit under the first ejection condition, and controls the second ejector unit under the same condition as the first ejection condition, for the same molding product, when a predetermined condition is satisfied. The display processing unit performs display in a state where a setting change in the first ejection condition is allowed and a setting change in the second ejection condition is suppressed, or performs display in a state where a setting change in the second ejection condition is allowed and a setting change in the first ejection condition is suppressed, when the predetermined condition is satisfied.

According to an aspect of the present invention, it is possible to suppress a difference in ejection operations performed on the same molding product between a first ejector unit and a second ejector unit. Therefore, it is possible to reduce a load applied to the molding product and a mold unit.

### BRIEF DESCRIPTION OF THE DRAWINGS

FIG. 1 is a view illustrating a state when mold opening is completed in an injection molding machine according to an embodiment.
FIG. 2 is a view illustrating a state when mold clamping is performed in the injection molding machine according to the embodiment.
FIG. 3 is a view when a movable platen, a rotary table, and a movable die according to the embodiment are viewed from a front side.
FIG. 4 is a sectional view taken along line IV-IV in FIG. 3, and is a sectional view illustrating an example of a state of the injection molding machine when the mold clamping is performed.
FIG. 5 is a sectional view illustrating an example of a state of the injection molding machine when the mold opening is performed, subsequently to FIG. 4.
FIG. 6 is a sectional view illustrating an example of a state of the injection molding machine when the mold clamping is performed, subsequently to FIG. 5.
FIG. 7 is a sectional view taken along line VII-VII in FIG. 6 and is a sectional view illustrating an example of a state of the injection molding machine when the mold clamping illustrated in FIG. 6 is performed.
FIG. 8 is a sectional view illustrating an example of a state of the injection molding machine when the mold opening is performed.
FIG. 9 is a sectional view illustrating an example of a state of the injection molding machine when a second ejector rod abuts on a second ejector plate, before a first ejector rod abuts on a first ejector plate.
FIG. 10 is a sectional view illustrating an example of a state of the injection molding machine when the first ejector rod abuts on the first ejector plate and simultaneously, the second ejector rod abuts on the second ejector plate.
FIG. 11 is a sectional view illustrating an example of a state of the injection molding machine when the first ejector rod and the second ejector rod are located at ejection positions .
FIG. 12 is a functional block diagram illustrating components of a control device according to the embodiment.
FIG. 13 is a view illustrating an example of a display screen displayed on a display unit by a display processing unit of the control device according to the embodiment.
FIG. 14 is a view illustrating an example of a display screen displayed on the display unit when a simultaneous ejection mode is selected by the display processing unit of the control device according to the embodiment.
FIG. 15 is a flowchart illustrating a setting process when the simultaneous ejection mode is selected in the control device according to the embodiment.
FIG. 16 is a flowchart illustrating each process relating to control of a mold unit which is performed by the control device according to the embodiment.

### DETAILED DESCRIPTION OF THE INVENTION

Hereinafter, embodiments of the present invention will be described with reference to the drawings. In each drawing, the same or corresponding reference numerals will be assigned to the same or corresponding configurations, and description thereof will be omitted.

### Injection Molding Machine

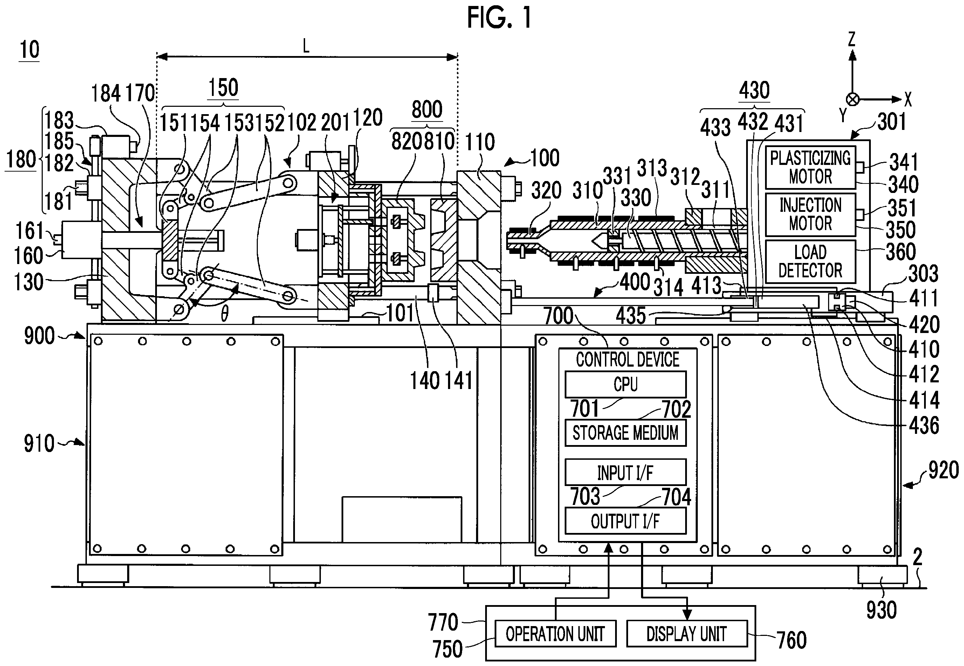

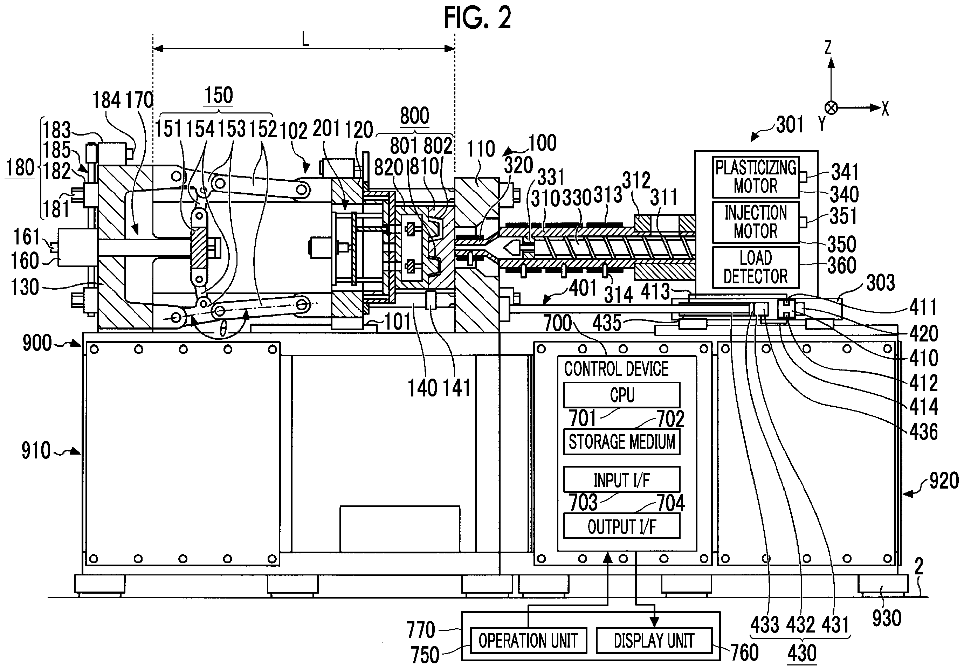

FIG. 1 is a view illustrating a state when mold opening is completed in an injection molding machine according to an embodiment. FIG. 2 is a view illustrating a state when mold clamping is performed in the injection molding machine according to the embodiment. In FIGS. 1 and 2, an X-axial direction, a Y-axial direction, and a Z-axial direction are perpendicular to each other. The X-axial direction and the Y-axial direction represent a horizontal direction, and the Z-axial direction represents a vertical direction. When a mold clamping unit 100 is a horizontal type, the X-axial direction represents a mold opening and closing direction, and the Y-axial direction represents a width direction of the injection molding machine 10. A negative side in the Y-axial direction is an operation side, and a positive side in the Y-axial direction is a counter operation side.

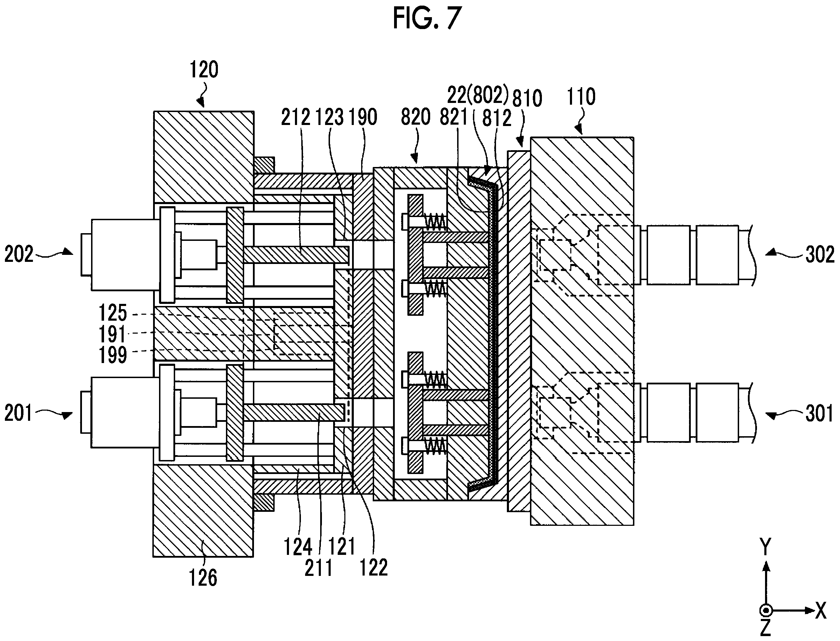

As illustrated in FIGS. 1 and 2, the injection molding machine 10 includes a mold clamping unit 100 that opens and closes a mold unit 800, a first ejector unit 201 that ejects a second molding product 22 molded by the mold unit 800, a second ejector unit 202 (refer to FIG. 7) that ejects the second molding product 22 molded by the mold unit 800, a first injection unit 301 that injects a molding material into the mold unit 800, a second injection unit 302 (refer to FIG. 7) that injects the molding material into the mold unit 800, a first moving unit 401 that advances and retreats the first injection unit 301 with respect to the mold unit 800, a second moving unit (not illustrated) that advances and retreats the second injection unit 302 with respect to the mold unit 800, a control device 700 that controls each component of the injection molding machine 10, and a frame 900 that supports each component of the injection molding machine 10. The frame 900 includes a mold clamping unit frame 910 that supports the mold clamping unit 100, and an injection unit frame 920 that supports the first injection unit 301 and the second injection unit 302. The mold clamping unit frame 910 and the injection unit frame 920 are respectively installed on a floor 2 via a leveling adjuster 930. The control device 700 is disposed in an internal space of the injection unit frame 920. Hereinafter, each component of the injection molding machine 10 will be described.

### Mold Clamping Unit

In describing the mold clamping unit 100, a moving direction of a movable platen 120 when mold closing is performed (for example, a positive direction of an X-axis) will be defined as forward, and a moving direction of the movable platen 120 when mold opening is performed (for example, a negative direction of the X-axis) will be defined as rearward.

The mold clamping unit 100 performs mold closing, pressurizing, mold clamping, depressurizing, and mold opening of the mold unit 800. The mold unit 800 includes a stationary die 810 and a movable die 820.

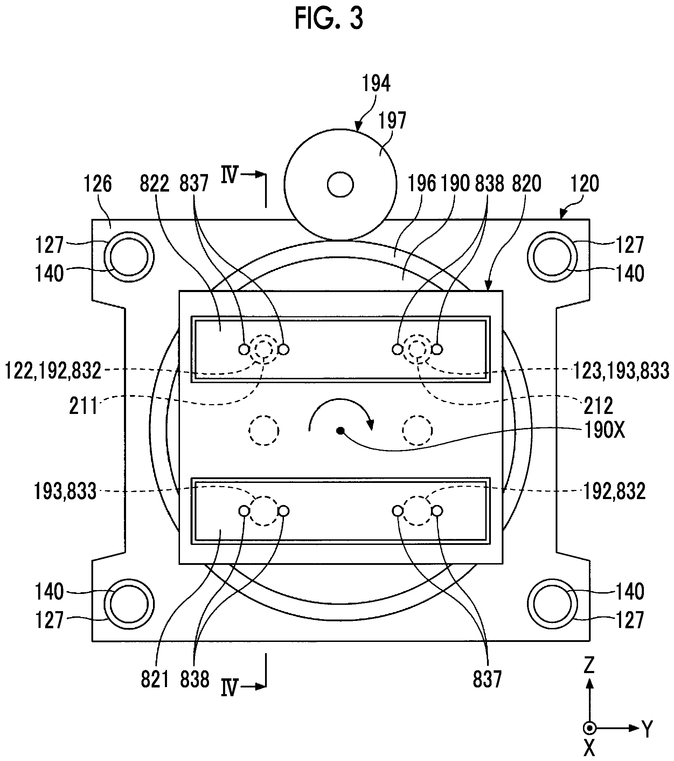

For example, the mold clamping unit 100 is a horizontal type, and the mold opening and closing direction is a horizontal direction. The mold clamping unit 100 includes a stationary platen 110, the movable platen 120, a rotary table 190 (refer to FIG. 3), a rotation mechanism 194 (refer to FIG. 3), and a moving mechanism 102.

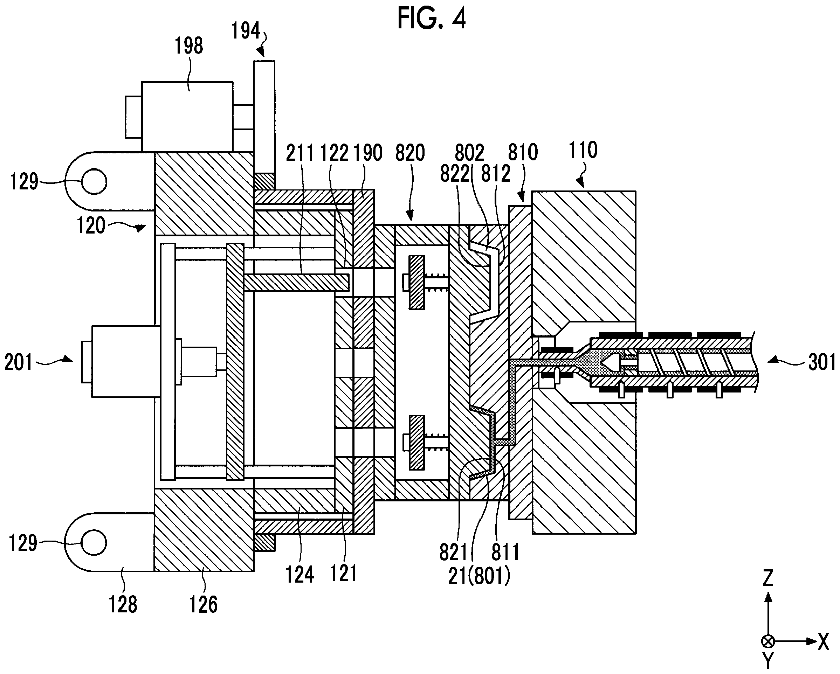

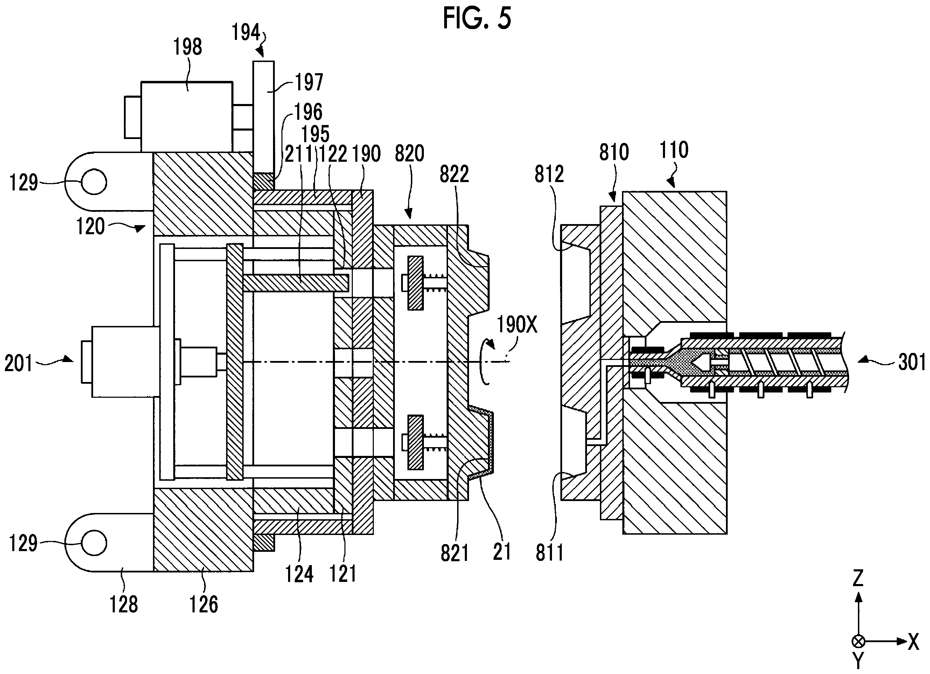

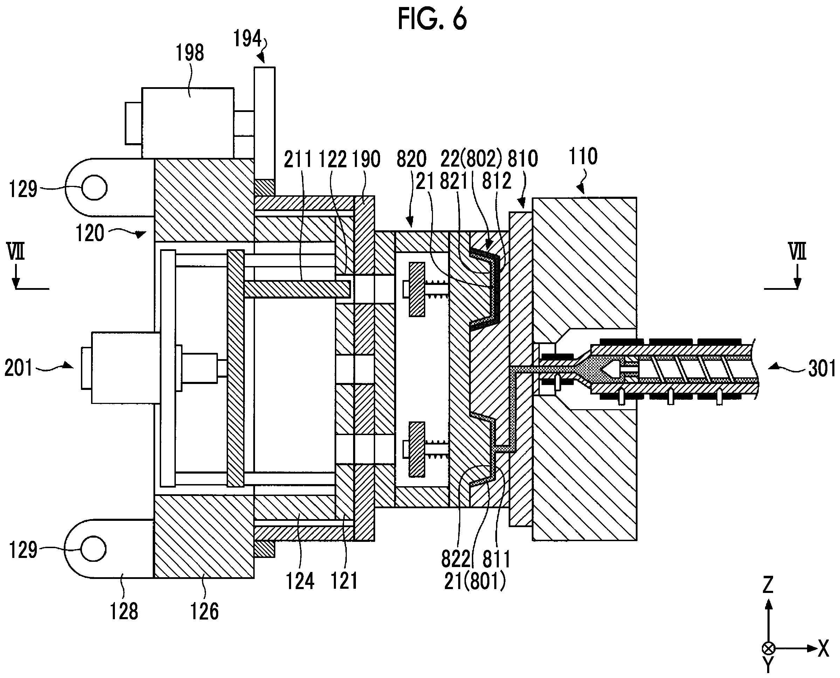

FIG. 3 is a view when the movable platen, the rotary table, and the movable die 820 according to the embodiment are viewed from a front side. FIG. 4 is a sectional view taken along line IV-IV in FIG. 3, and is a sectional view illustrating an example of a state of the injection molding machine when mold clamping is performed. FIG. 5 is a sectional view illustrating an example of a state of the injection molding machine when the mold opening is performed, subsequently to FIG. 4. FIG. 6 is a sectional view illustrating an example of a state of the injection molding machine when the mold clamping is performed, subsequently to FIG. 5. FIG. 7 is a sectional view taken along line VII-VII in FIG. 6 and is a sectional view illustrating an example of a state of the injection molding machine when the mold clamping illustrated in FIG. 6 is performed. The X-axial direction, the Y-axial direction, and the Z-axial direction in FIGS. 3 to 7 are directions the same as the X-axial direction, the Y-axial direction, and the Z-axial direction in FIGS. 1 and 2.

The stationary platen 110 is fixed to the mold clamping unit frame 910. The stationary die 810 is attached to a surface facing the movable platen 120 in the stationary platen 110. The stationary die 810 includes a first stationary molding surface 811 and a second stationary molding surface 812 on a surface facing the movable die 820.

The first stationary molding surface 811 forms a portion of a wall surface of a first cavity space 801 in which the first molding product 21 is molded. On the other hand, the second stationary molding surface 812 forms a portion of a wall surface of a second cavity space 802 in which the second molding product 22 is molded.

The first stationary molding surface 811 and the second stationary molding surface 812 are formed in different shapes, and each is formed in a recessed shape, for example. The first stationary molding surface 811 and the second stationary molding surface 812 are formed in the same die plate, but may be formed in different die plates.

The movable platen 120 is disposed to be movable in the mold opening and closing direction with respect to the mold clamping unit frame 910. A guide 101 that guides the movable platen 120 is laid on the mold clamping unit frame 910. The movable die 820 is attached to a surface facing the stationary platen 110 in the movable platen 120 via the rotary table 190. As illustrated by a broken line in FIG. 7, the movable platen 120 supports a rotary shaft 191 of the rotary table 190 to be rotatable via a bearing 199.

The movable die 820 has a first movable molding surface 821 and a second movable molding surface 822 on a surface facing the stationary die 810. The first movable molding surface 821 and the second movable molding surface 822 respectively and sequentially form a portion of the wall surface of the first cavity space 801 and a portion of the wall surface of the second cavity space 802 (refer to FIGS. 4 and 6).

The first movable molding surface 821 and the second movable molding surface 822 are formed in the same shape, and are respectively formed in a protruded shape, for example. The first movable molding surface 821 and the second movable molding surface 822 are formed in the same die plate, but may be formed in different die plates.

In the present embodiment, the first stationary molding surface 811 and the second stationary molding surface 812 are formed in the recessed shape, and the first movable molding surface 821 and the second movable molding surface 822 are formed in the protruded shape. However, the present invention is not limited thereto. That is, the first stationary molding surface 811 and the second stationary molding surface 812 may be formed in the protruded shape, and the first movable molding surface 821 and the second movable molding surface 822 may be formed in the recessed shape.

The rotation mechanism 194 rotates the rotary table 190. The rotation mechanism 194 includes a cylindrical rotation cylinder 195 extending rearward from an outer peripheral portion of the rotary table 190, a driven gear 196 formed on an entire outer peripheral surface of the rotation cylinder 195 in a circumferential direction, and a driving gear 197 that meshes with the driven gear 196, and a rotation motor 198 that rotates the driving gear 197. A rotational driving force of the rotation motor 198 is transmitted to the rotary table 190 via the driving gear 197, the driven gear 196, and the rotation cylinder 195.

The rotation motor 198 is disposed above the movable platen 120 (positive side in the Z-axial direction), but may be disposed below the movable platen 120 (negative side in the Z-axial direction), or may be disposed on a side of the movable platen 120 (positive side in the Y-axial direction or negative side in the Y-axial direction). In addition, a timing belt may be used as means for transmitting the rotational driving force of the rotation motor 198 to the rotary table 190.

The rotation mechanism 194 rotates the rotary table 190 by 180° when the mold opening is performed. In this manner, the first movable molding surface 821 turns between a position (refer to FIG. 4) forming a portion of the wall surface of the first cavity space 801 and a position (refer to FIG. 6) forming a portion of the wall surface of the second cavity space 802. Similarly, the rotation mechanism 194 rotates the rotary table 190 by 180° when the mold opening is performed. In this manner, the second movable molding surface 822 turns between a position (refer to FIG. 6) forming a portion of the wall surface of the first cavity space 801 and a position (refer to FIG. 4) forming a portion of the wall surface of the second cavity space 802.

When the mold clamping illustrated in FIG. 4 is performed, the first movable molding surface 821 and the first stationary molding surface 811 form the first cavity space 801, and the second movable molding surface 822 and the second stationary molding surface 812 form the second cavity space 802. In addition, when the mold clamping illustrated in FIG. 6 is performed, the second movable molding surface 822 and the first stationary molding surface 811 form the first cavity space 801, and the first movable molding surface 821 and the second stationary molding surface 812 form the second cavity space 802.

The rotation mechanism 194 may reverse a rotation direction of the rotary table 190 each time the rotary table 190 rotates by 180°. For example, the rotation mechanism 194 rotates the rotary table 190 by 180° in a clockwise direction, and thereafter, rotates the rotary table 190 by 180° in a counterclockwise direction. Disposition of a wiring and a pipe which are fixed to the rotary table 190 returns to an original disposition. Therefore, the wiring and the piping can be easily handled.

The moving mechanism 102 (refer to FIGS. 1 and 2) performs mold closing, pressurizing, mold clamping, depressurizing, and mold opening of the mold unit 800 by relatively moving the stationary platen 110 and the movable platen 120 close to or away from each other. When the mold opening is performed, the rotation mechanism 194 rotates the rotary table 190 by 180°. The moving mechanism 102 includes a toggle support 130 disposed at an interval from the stationary platen 110, a tie bar 140 that connects the stationary platen 110 and the toggle support 130 to each other, a toggle mechanism 150 that moves the movable platen 120 in the mold opening and closing direction with respect to the toggle support 130, a mold clamping motor 160 that operates the toggle mechanism 150, a motion conversion mechanism 170 that converts a rotary motion into a linear motion of the mold clamping motor 160, and a mold space adjustment mechanism 180 that adjusts an interval L between the stationary platen 110 and the toggle support 130.

The toggle support 130 is disposed at an interval from the stationary platen 110, and is placed on the mold clamping unit frame 910 to be movable in the mold opening and closing direction. The toggle support 130 may be disposed to be movable along a guide laid on the mold clamping unit frame 910. The guide of the toggle support 130 may be common to the guide 101 of the movable platen 120.

In the present embodiment, the stationary platen 110 is fixed to the mold clamping unit frame 910, and the toggle support 130 is disposed to be movable in the mold opening and closing direction with respect to the mold clamping unit frame 910. However, the toggle support 130 may be fixed to the mold clamping unit frame 910, and the stationary platen 110 may be disposed to be movable in the mold opening and closing direction with respect to the mold clamping unit frame 910.

The tie bar 140 connects the stationary platen 110 and the toggle support 130 to each other at an interval L in the mold opening and closing direction. A plurality of (for example, four) tie bars 140 may be used. The plurality of tie bars 140 are disposed parallel to each other in the mold opening and closing direction, and extend in accordance with a mold clamping force. At least one of the tie bars 140 may be provided with a tie bar strain detector 141 that detects a strain of the tie bar 140. The tie bar strain detector 141 transmits a signal indicating a detection result thereof to the control device 700. The detection result of the tie bar strain detector 141 is used in detecting the mold clamping force.

In the present embodiment, as a mold clamping force detector for detecting the mold clamping force, the tie bar strain detector 141 is used. However, the present invention is not limited thereto. The mold clamping force detector is not limited to a strain gauge type. The mold clamping force detector may be a piezoelectric type, a capacitive type, a hydraulic type, or an electromagnetic type, and an attachment position thereof is not limited to the tie bar 140.

The toggle mechanism 150 is disposed between the movable platen 120 and the toggle support 130, and moves the movable platen 120 in the mold opening and closing direction with respect to the toggle support 130. The toggle mechanism 150 has a crosshead 151 that moves in the mold opening and closing direction, and a pair of link groups bent and stretched by a movement of the crosshead 151. Each of the pair of link groups has a first link 152 and a second link 153 which are connected to be freely bent and stretched by a pin. The first link 152 is oscillatingly attached to the movable platen 120 by a pin. The second link 153 is oscillatingly attached to the toggle support 130 by a pin. The second link 153 is attached to the crosshead 151 via a third link 154. When the crosshead 151 is advanced and retreated with respect to the toggle support 130, the first link 152 and the second link 153 are bent and stretched, and the movable platen 120 is advanced and retreated with respect to the toggle support 130.

A configuration of the toggle mechanism 150 is not limited to configurations illustrated in FIGS. 1 and 2. For example, in FIGS. 1 and 2, the number of nodes in each link group is five, but may be four. One end portion of the third link 154 may be connected to the node between the first link 152 and the second link 153.

The mold clamping motor 160 is attached to the toggle support 130, and operates the toggle mechanism 150. The mold clamping motor 160 advances and retreats the crosshead 151 with respect to the toggle support 130. In this manner, the first link 152 and second link 153 are bent and stretched so that the movable platen 120 is advanced and retreated with respect to the toggle support 130. The mold clamping motor 160 is directly connected to the motion conversion mechanism 170, but may be connected to the motion conversion mechanism 170 via a belt or a pulley.

The motion conversion mechanism 170 converts a rotary motion of the mold clamping motor 160 into a linear motion of the crosshead 151. The motion conversion mechanism 170 includes a screw shaft and a screw nut screwed to the screw shaft. A ball or a roller may be interposed between the screw shaft and the screw nut.

The mold clamping unit 100 performs a mold closing process, a pressurizing process, a mold clamping process, a depressurizing process, a mold opening process, and a mold rotating process under the control of the control device 700. The mold rotating process is performed after the completion of the mold opening process and before the start of the next mold closing process. In the present embodiment, the mold rotating process is performed after an ejection process is completed, but may be performed before the ejection process is completed. For example, when a position where a secondary molding product is molded and a position where the secondary molding product is ejected are different from each other, the mold rotating process is performed after the mold opening process is completed, and thereafter, the ejection process is performed. Specifically, for example, when the position where the secondary molding product is molded is located on the operation side, and the position where the secondary molding product is ejected is located on the counter operation side, the mold rotating process is performed after the mold opening process is completed, and thereafter, the ejection process is performed.

In the mold closing process, the mold clamping motor 160 is driven to advance the movable platen 120 by advancing the crosshead 151 to a mold closing completion position at a set movement speed. In this manner, the movable die 820 is caused to touch the stationary die 810. For example, a position or a movement speed of the crosshead 151 is detected by using a mold clamping motor encoder 161. The mold clamping motor encoder 161 detects rotation of the mold clamping motor 160, and transmits a signal indicating a detection result thereof to the control device 700.

A crosshead position detector for detecting a position of the crosshead 151 and a crosshead movement speed detector for measuring a movement speed of the crosshead 151 are not limited to the mold clamping motor encoder 161, and a general detector can be used. In addition, a movable platen position detector for detecting a position of the movable platen 120 and a movable platen movement speed detector for measuring a movement speed of the movable platen 120 are not limited to the mold clamping motor encoder 161, and a general detector can be used.

In the pressurizing process, the mold clamping motor 160 is further driven to further advance the crosshead 151 from the mold closing completion position to a mold clamping position, thereby generating a mold clamping force.

In the mold clamping process, the mold clamping motor 160 is driven to maintain a position of the crosshead 151 at the mold clamping position. In the mold clamping process, the first cavity space 801 and the second cavity space 802 are formed between the movable die 820 and the stationary die 810 as illustrated in FIG. 2.

In the depressurizing process, the mold clamping motor 160 is driven to retreat the crosshead 151 from the mold clamping position to a mold opening start position. In this manner, the movable platen 120 is retreated to reduce the mold clamping force. The mold opening start position and the mold closing completion position may be the same position.

In the mold opening process, the mold clamping motor 160 is driven to retreat the crosshead 151 from the mold opening start position to the mold opening completion position at a set movement speed. In this manner, the movable platen 120 is retreated so that the movable die 820 is separated from the stationary die 810.

After the mold opening process is completed and before the subsequent mold closing process starts, the ejection process is performed. In the ejection process which will be described in detail later, the first ejector unit 201 and the second ejector unit 202 eject the second molding product 22 from the movable die 820. After the ejection process is completed and before the subsequent mold closing process starts, the mold rotating process is performed.

In the mold rotating process, the rotary table 190 is rotated, and the first molding product 21 is rotated together with the movable die 820. Thereafter, the mold closing process and the pressurizing process are performed so that the first molding product 21 is disposed in a portion of the second cavity space 802.

Setting conditions in the mold closing process and the pressurizing process are collectively set as a series of setting conditions. For example, the movement speed or positions of the crosshead 151 (including the mold closing start position, the movement speed switching position, the mold closing completion position, and the mold clamping position) and the mold clamping force in the mold closing process and the pressurizing process are collectively set as a series of setting conditions. The mold closing start position, the movement speed switching position, the mold closing completion position, and the mold clamping position are aligned in this order from a rear side toward a front side, and represent a start point and an end point of a section in which the movement speed is set. The movement speed is set for each section. The number of the movement speed switching positions may be one or more. The movement speed switching position may not be set. Only one of the mold clamping position and the mold clamping force may be set.

The setting conditions in the depressurizing process and the mold opening process are set in the same manner . For example, the movement speed or positions (the mold opening start position, the movement speed switching position, and the mold opening completion position) of the crosshead 151 in the depressurizing process and the mold opening process are collectively set as a series of setting conditions. The mold opening start position, the movement speed switching position, and the mold opening completion position are aligned in this order from the front side toward the rear side, and represent the start point and the end point of the section in which the movement speed is set. The movement speed is set for each section. The number of the movement speed switching positions may be one or more. The movement speed switching position may not be set. The mold opening start position and the mold closing completion position may be the same position. In addition, the mold opening completion position and the mold closing start position may be the same position.

Instead of the movement speed or the position of the crosshead 151, the movement speed or the position of the movable platen 120 may be set. In addition, instead of the position (for example, the mold clamping position) of the crosshead or the position of the movable platen, the mold clamping force may be set.

Incidentally, the toggle mechanism 150 amplifies a driving force of the mold clamping motor 160, and transmits the driving force to the movable platen 120. An amplification magnification is referred to as a toggle magnification. The toggle magnification is changed according to an angle θ (hereinafter, also referred to as a "link angle θ") formed between the first link 152 and the second link 153. The link angle θ is obtained from the position of the crosshead 151. When the link angle θ is 180°, the toggle magnification is maximized.

When a mold space of the mold unit 800 is changed due to replacement of the mold unit 800 or a temperature change in the mold unit 800, mold space adjustment is performed so that a predetermined mold clamping force is obtained during the mold clamping. For example, in the mold space adjustment, the interval L between the stationary platen 110 and the toggle support 130 is adjusted so that the link angle θ of the toggle mechanism 150 becomes a predetermined angle when the movable die 820 touches the stationary die 810.

The mold clamping unit 100 has the mold space adjustment mechanism 180. The mold space adjustment mechanism 180 performs the mold space adjustment by adjusting the interval L between the stationary platen 110 and the toggle support 130. For example, a timing for the mold space adjustment is determined from an end point of a molding cycle to a start point of a subsequent molding cycle. For example, the mold space adjustment mechanism 180, has a screw shaft 181 formed in a rear end portion of the tie bar 140, a screw nut 182 held by the toggle support 130 to be rotatable and not to be advanced and retreated, and a mold space adjustment motor 183 that rotates the screw nut 182 screwed to the screw shaft 181.

The screw shaft 181 and the screw nut 182 are provided for each of the tie bars 140. A rotational driving force of the mold space adjustment motor 183 may be transmitted to a plurality of the screw nuts 182 via a rotational driving force transmitting unit 185. The plurality of screw nuts 182 can be rotated in synchronization with each other. The plurality of screw nuts 182 can be individually rotated by changing a transmission channel of the rotational driving force transmitting unit 185.

For example, the rotational driving force transmitting unit 185 is configured to include a gear. In this case, a driven gear is formed on an outer periphery of each screw nut 182, a driving gear is attached to an output shaft of the mold space adjustment motor 183, and a plurality of intermediate gears meshing with the driven gear and the driving gear are held to be rotatable in a central portion of the toggle support 130. The rotational driving force transmitting unit 185 may be configured to include a belt or a pulley instead of the gear.

An operation of the mold space adjustment mechanism 180 is controlled by the control device 700. The control device 700 drives the mold space adjustment motor 183 to rotate the screw nut 182. As a result, a position of the toggle support 130 with respect to the tie bar 140 is adjusted, and the interval L between the stationary platen 110 and the toggle support 130 is adjusted. In addition, a plurality of the mold space adjustment mechanisms may be used in combination.

The interval L is detected by using the mold space adjustment motor encoder 184. The mold space adjustment motor encoder 184 detects a rotation amount or a rotation direction of the mold space adjustment motor 183, and transmits a signal indicating a detection result thereof to the control device 700. The detection result of the mold space adjustment motor encoder 184 is used in monitoring or controlling the position or the interval L of the toggle support 130. A toggle support position detector for detecting the position of the toggle support 130 and an interval detector for detecting the interval L are not limited to the mold space adjustment motor encoder 184, and a general detector can be used.

The mold clamping unit 100 may have a mold temperature controller that adjusts the temperature of the mold unit 800. The mold unit 800 has a flow path of the temperature control medium inside the mold unit 800. The mold temperature controller adjusts the temperature of the mold unit 800 by adjusting the temperature of the temperature control medium supplied to the flow path of the mold unit 800.

The mold clamping unit 100 of the present embodiment is the horizontal type in which the mold opening and closing direction is the horizontal direction, but may be a vertical type in which the mold opening and closing direction is an upward-downward direction.

The mold clamping unit 100 of the present embodiment includes the mold clamping motor 160 as a drive source . However, a hydraulic cylinder may be provided instead of the mold clamping motor 160. In addition, the mold clamping unit 100 may have a linear motor for mold opening and closing, and may have an electromagnet for mold clamping.

### First Ejector Unit and Second Ejector Unit

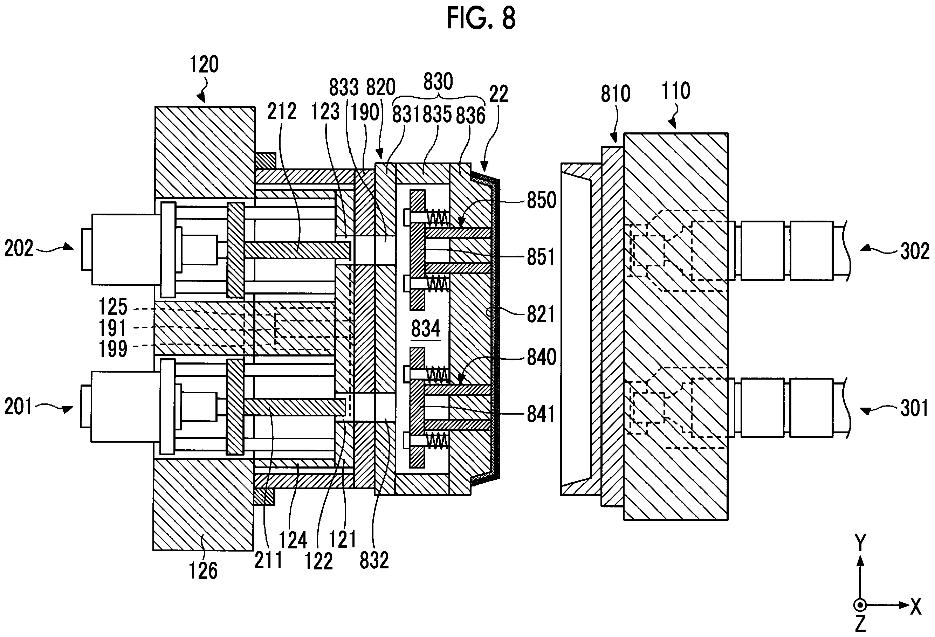

In describing the first ejector unit 201 and the second ejector unit 202 (refer to FIG. 8), similarly to the description of the mold clamping unit 100, a moving direction of the movable platen 120 when the mold closing is performed (for example, a positive direction of the X-axis) will be defined as forward, and a moving direction of the movable platen 120 when the mold opening is performed (for example, a negative direction of the X-axis) will be defined as rearward.

The first ejector unit 201 and the second ejector unit 202 are attached to the movable platen 120, and are advanced and retreated together with the movable platen 120. The first ejector unit 201 and the second ejector unit 202 eject the second molding product 22 from the movable die 820 when the mold opening is performed.

The first ejector unit 201 ejects the molding product molded in the cavity space formed between the stationary die 810 (example of a first die) and the movable die 820 (example of a second die), from the movable die 820. The first ejector unit 201 according to the present embodiment includes a first ejector rod 211 advanced and retreated with respect to the stationary portion 830 of the movable die 820. The first ejector rod 211 presses a first movable portion 840 of the movable die 820 forward so that the second molding product 22 is separated from the stationary portion 830 of the movable die 820.

The first ejector rod 211 may be connected to the first movable portion 840 of the movable die 820. However, in the present embodiment, the first ejector rod 211 is not connected to the first movable portion 840 of the movable die 820 in order to rotate the movable die 820.

The first ejector rod 211 moves close to and abuts on the first movable portion 840 of the movable die 820 by advancing with respect to the stationary portion 830 of the movable die 820, and separates the second molding product 22 from the stationary portion 830 by pressing the first movable portion 840 forward.

Similarly, the second ejector unit 202 ejects the molding product molded in the cavity space formed between the stationary die 810 and the movable die 820, from the movable die 820. The second ejector unit 202 according to the present embodiment includes a second ejector rod 212 that advances and retreats with respect to the stationary portion 830 of the movable die 820. The second ejector rod 212 separates the second molding product 22 from the stationary portion 830 of the movable die 820 by pressing the second movable portion 850 of the movable die 820 forward.

The second ejector rod 212 may be connected to the second movable portion 850 of the movable die 820. However, in the present embodiment, the second ejector rod 212 is not connected to the second movable portion 850 of the movable die 820 in order to rotate the movable die 820.

The second ejector rod 212 moves close to and abuts on the second movable portion 850 of the movable die 820 by advancing with respect to the stationary portion 830 of the movable die 820, and separates the second molding product 22 from the stationary portion 830 by pressing the second movable portion 850 forward.

The first ejector unit 201 and the second ejector unit 202 are disposed at an interval in the Y-axial direction. On the other hand, the first cavity space 801 and the second cavity space 802 are disposed at an interval in the Z-axial direction perpendicular to the Y-axial direction (refer to FIG. 6).

A direction in which the first ejector unit 201 and the second ejector unit 202 are aligned and a direction in which the first cavity space 801 and the second cavity space 802 are aligned are perpendicular to each other. The direction in which the first ejector unit 201 and the second ejector unit 202 are aligned is the Y-axial direction, for example. The direction in which the first cavity space 801 and the second cavity space 802 are aligned is the Z-axial direction, for example.

The direction in which the first ejector unit 201 and the second ejector unit 202 are aligned and the direction in which the first cavity space 801 and the second cavity space 802 are aligned may be opposite to each other. For example, the direction in which the first ejector unit 201 and the second ejector unit 202 are aligned may be the Z-axial direction. The direction in which the first cavity space 801 and the second cavity space 802 are aligned may be the Y-axial direction.

For example, the second cavity space 802 is disposed above the first cavity space 801 so that the second molding product 22 is unloaded upward of the mold clamping unit 100. In this case, the first ejector rod 211 and the second ejector rod 212 are disposed above a rotation center line 190X of the rotary table 190 (refer to FIG. 3).

For example, the second cavity space 802 may be disposed below the first cavity space 801 so that the second molding product 22 falls downward of the mold clamping unit 100. In this case, the first ejector rod 211 and the second ejector rod 212 are disposed below the rotation center line 190X of the rotary table 190.

The first ejector unit 201 and the second ejector unit 202 are disposed at an interval in the Y-axial direction, and ejects the second molding product 22 elongated in the Y-axial direction, from the movable die 820. The second molding product 22 can be pressed at a plurality of locations in the longitudinal direction of the second molding product 22. Therefore, deformation of the second molding product 22 can be prevented, and damage to the second molding product 22 can be prevented.

The first ejector unit 201 and the second ejector unit 202 perform an ejection process under the control of the control device 700. In the ejection process, the first ejector rod 211 and the second ejector rod 212 are advanced from a standby position to an ejection position at a set movement speed. In this manner, the second molding product 22 is ejected from the movable die 820. Thereafter, in the ejection process, the first ejector rod 211 and the second ejector rod 212 are retreated from the ejection position to the standby position at a set movement speed.

### First Injection Unit and Second Injection Unit

In describing the first injection unit 301 and the second injection unit 302 (refer to FIG. 7), unlike the description of the mold clamping unit 100, a moving direction of the screw 330 during filling (for example, the negative direction of the X-axis) will be defined as forward, and a moving direction of the screw 330 during plasticizing (for example, the positive direction of the X-axis) will be defined as rearward.

The first injection unit 301 is installed in a first slide base 303, and the first slide base 303 is disposed to be freely advanced and retreated with respect to the injection unit frame 920. The first injection unit 301 is disposed to be freely advanced and retreated with respect to the mold unit 800. The first injection unit 301 touches the mold unit 800 (more specifically, the stationary die 810) to fill the first cavity space 801 inside the mold unit 800 with the molding material.

The second injection unit 302 is installed in a second slide base, and the second slide base is disposed to be freely advanced and retreated with respect to the injection unit frame 920. The second injection unit 302 is disposed to be freely advanced and retreated with respect to the mold unit 800. The second injection unit 302 touches the mold unit 800 (more specifically, the stationary die 810) to fill the second cavity space 802 inside the mold unit 800 with the molding material.

The first injection unit 301 and the second injection unit 302 are disposed at an interval in the Y-axial direction. On the other hand, the first cavity space 801 and the second cavity space 802 are disposed at an interval in the Z-axial direction perpendicular to the Y-axial direction. The molding material for filling the first cavity space 801 by the first injection unit 301 and the molding material for filling the second cavity space 802 by the second injection unit 302 may be different materials, or may be the same material.

The first injection unit 301 and the second injection unit 302 are configured in the same manner. Therefore, hereinafter, the configuration of the first injection unit 301 will be described, and the configuration of the second injection unit 302 will be omitted in the description. For example, the first injection unit 301 includes a cylinder 310 that heats the molding material, a nozzle 320 provided in a front end portion of the cylinder 310, the screw 330 disposed to be rotatable and freely advanced and retreated inside the cylinder 310, a plasticizing motor 340 that rotates the screw 330, an injection motor 350 that advances and retreats the screw 330, and a load detector 360 that detects a force transmitted between the injection motor 350 and the screw 330 (refer to FIGS. 1 and 2).

The cylinder 310 heats the molding material supplied into the cylinder 310 from a feed port 311. For example, the molding material includes a resin. For example, the molding material is formed in a pellet shape, and is supplied to the feed port 311 in a solid state. The feed port 311 is formed in a rear portion of the cylinder 310. A cooler 312 such as a water-cooling cylinder is provided on an outer periphery of the rear portion of the cylinder 310. In front of the cooler 312, a heating unit 313 such as a band heater and a temperature measurer 314 are provided on an outer periphery of the cylinder 310.

The cylinder 310 is divided into a plurality of zones in the axial direction (for example, the X-axial direction) of the cylinder 310. The heating unit 313 and the temperature measurer 314 are provided in each of the plurality of zones. The control device 700 controls the heating unit 313 so that a set temperature is set in each of the plurality of zones and a measurement temperature of the temperature measurer 314 reaches the set temperature.

The nozzle 320 is provided in a front end portion of the cylinder 310, and is pressed against the mold unit 800. The heating unit 313 and the temperature measurer 314 are provided on the outer periphery of the nozzle 320. The control device 700 controls the heating unit 313 so that a measurement temperature of the nozzle 320 reaches the set temperature.

The screw 330 is disposed to be rotatable and to be freely advanced and retreated inside the cylinder 310. When the screw 330 is rotated, the molding material is fed forward along a helical groove of the screw 330. The molding material is gradually melted by heat from the cylinder 310 while being fed forward. As the liquid molding material is fed forward of the screw 330 and is accumulated in a front portion of the cylinder 310, the screw 330 is retreated. Thereafter, when the screw 330 is advanced, the liquid molding material accumulated in front of the screw 330 is injected from the nozzle 320, and fills the inside of the mold unit 800.

As a backflow prevention valve for preventing a backflow of the molding material fed rearward from the front of the screw 330 when the screw 330 is pressed forward, a backflow prevention ring 331 is attached to the front portion of the screw 330 to be freely advanced and retreated.

The backflow prevention ring 331 is pressed rearward by the pressure of the molding material in front of the screw 330 when the screw 330 is advanced, and is relatively retreated with respect to the screw 330 to a close position (refer to FIG. 2) for closing a flow path of the molding material. In this manner, the backflow of the molding material accumulated in front of the screw 330 is prevented.

On the other hand, the backflow prevention ring 331 is pressed forward by the pressure of the molding material fed forward along the helical groove of the screw 330 when the screw 330 is rotated, and is relatively advanced with respect to the screw 330 to an open position (refer to FIG. 1) for opening the flow path of the molding material. In this manner, the molding material is fed forward of the screw 330.

The backflow prevention ring 331 may be either a co-rotation type rotating together with the screw 330 or a non-co-rotation type that does not rotate together with the screw 330.

The first injection unit 301 may have a drive source that advances and retreats the backflow prevention ring 331 with respect to the screw 330 between the open position and the close position.

The plasticizing motor 340 rotates the screw 330. The drive source for rotating the screw 330 is not limited to the plasticizing motor 340, and may be a hydraulic pump, for example.

The injection motor 350 advances and retreats the screw 330. A motion conversion mechanism that converts a rotary motion of the injection motor 350 into a linear motion of the screw 330 is provided between the injection motor 350 and the screw 330. For example, the motion conversion mechanism has a screw shaft and a screw nut screwed to the screw shaft. A ball or a roller may be provided between the screw shaft and the screw nut. The drive source that advances and retreats the screw 330 is not limited to the injection motor 350, and may be a hydraulic cylinder, for example.

The load detector 360 detects a force transmitted between the injection motor 350 and the screw 330. The detected force is converted into the pressure by the control device 700. The load detector 360 is provided in a force transmission channel between the injection motor 350 and the screw 330, and detects the force acting on the load detector 360.

The load detector 360 transmits a signal indicating a detection result thereof to the control device 700. The detection result of the load detector 360 is used in controlling or monitoring the pressure received from the molding material by the screw 330, a back pressure acting on the screw 330, or the pressure acting on the molding material from the screw 330.

A pressure detector for measuring the pressure of the molding material is not limited to the load detector 360, and a general detector can be used. For example, a nozzle pressure sensor or a mold internal pressure sensor may be used. The nozzle pressure sensor is installed in the nozzle 320. The mold internal pressure sensor is installed inside the mold unit 800.

In the plasticizing process, the plasticizing motor 340 is driven to rotate the screw 330 at a set rotation speed, and the molding material is fed forward along the helical groove of the screw 330. As a result, the molding material is gradually melted. As the liquid molding material is fed forward of the screw 330 and is accumulated in a front portion of the cylinder 310, the screw 330 is retreated. For example, a rotation speed of the screw 330 is measured by using a plasticizing motor encoder 341. The plasticizing motor encoder 341 detects the rotation of the plasticizing motor 340, and transmits a signal indicating a detection result thereof to the control device 700. A screw rotational speed detector for measuring the rotation speed of the screw 330 is not limited to the plasticizing motor encoder 341, and a general detector can be used.

In the plasticizing process, the injection motor 350 may be driven to apply a preset back pressure to the screw 330 in order to limit sudden retreat of the screw 330. The back pressure applied to the screw 330 is measured by using the load detector 360, for example. The load detector 360 transmits a signal indicating a detection result thereof to the control device 700. When the screw 330 is retreated to a plasticizing completion position and a predetermined amount of the molding material is accumulated in front of the screw 330, the plasticizing process is completed.

The position and the rotation speed of the screw 330 in the plasticizing process are collectively set as a series of setting conditions. For example, a plasticizing start position, a rotation speed switching position, and a plasticizing completion position are set. The positions are aligned in this order from the front side toward the rear side, and represent the start point and the end point of the section in which the rotation speed is set. The rotation speed is set for each section. The number of the rotation speed switching positions may be one or more. The rotation speed switching position may not be set. In addition, the back pressure is set for each section.

In the filling process, the injection motor 350 is driven to advance the screw 330 at a set movement speed, and the first cavity space 801 inside the mold unit 800 is filled with the liquid molding material accumulated in front of the screw 330. The position or the movement speed of the screw 330 is detected by using an injection motor encoder 351, for example. The injection motor encoder 351 detects the rotation of the injection motor 350, and transmits a signal indicating a detection result thereof to the control device 700. When the position of the screw 330 reaches a set position, the filling process is switched to the holding pressure process (so-called V/P switching). The position where the V/P switching is performed will be referred to as a V/P switching position. The set movement speed of the screw 330 may be changed in accordance with the position or a time of the screw 330.

The position and the movement speed of the screw 330 in the filling process are collectively set as a series of setting conditions. For example, a filling start position (also referred to as an "injection start position"), the movement speed switching position, and the V/P switching position are set. The positions are aligned in this order from the rear side toward the front side, and represent the start point and the end point of the section in which the movement speed is set. The movement speed is set for each section. The number of the movement speed switching positions may be one or more. The movement speed switching position may not be set.

An upper limit value of the pressure of the screw 330 is set for each section in which the movement speed of the screw 330 is set. The pressure of the screw 330 is measured by the load detector 360. When the pressure of the screw 330 is equal to or lower than a setting pressure, the screw 330 is advanced at a set movement speed. On the other hand, when the pressure of the screw 330 exceeds the setting pressure, in order to protect the mold, the screw 330 is advanced at the movement speed lower than the set movement speed so that the pressure of the screw 330 is equal to or lower than the setting pressure.

After the position of the screw 330 reaches the V/P switching position in the filling process, the screw 330 may be temporarily stopped at the V/P switching position, and thereafter, the V/P switching may be performed. Immediately before the V/P switching, instead of stopping the screw 330, the screw 330 may be advanced at a low speed, or may be retreated at a low speed. In addition, a screw position detector for detecting the position of the screw 330 and a screw movement speed detector for measuring the movement speed of the screw 330 are not limited to the injection motor encoder 351, and a general detector can be used.

In the holding pressure process, the injection motor 350 is driven to press the screw 330 forward. A pressure (hereinafter, also referred to as a "holding pressure") of the molding material in the front end portion of the screw 330 is held at a setting pressure, and the molding material remaining inside the cylinder 310 is pressed toward the mold unit 800. The molding material which is insufficient due to cooling shrinkage inside the mold unit 800 can be replenished. The holding pressure is measured by using the load detector 360, for example. The load detector 360 transmits a signal indicating a detection result thereof to the control device 700. A set value of the holding pressure may be changed depending on an elapsed time from the start of the holding pressure process . The holding pressure and a holding time for holding the holding pressure in the holding pressure process may be respectively set, or may be collectively set as a series of setting conditions.

In the holding pressure process, the molding material in the first cavity space 801 inside the mold unit 800 is gradually cooled, and when the holding pressure process is completed, an inlet of the first cavity space 801 is closed by the solidified molding material. This state is referred to as gate seal, and prevents the backflow of the molding material from the first cavity space 801. After the holding pressure process, a cooling process starts. In the cooling process, the molding material inside the first cavity space 801 is solidified. In order to shorten a molding cycle time, the plasticizing process may be performed during the cooling process.

The first injection unit 301 of the present embodiment is an in-line screw type, but may be a pre-plastic type. The injection unit of the pre-plastic type supplies the molding material melted inside a plasticizing cylinder to an injection cylinder, and the molding material is injected into the mold unit 800 from the injection cylinder. Inside the plasticizing cylinder, the screw is disposed to be rotatable and not to be advanced and retreated, or the screw is disposed to be rotatable and to be freely advanced and retreated. On the other hand, a plunger is disposed to be freely advanced and retreated inside the injection cylinder.

In addition, the first injection unit 301 of the present embodiment is a horizontal type in which the axial direction of the cylinder 310 is a horizontal direction, but may be a vertical type in which the axial direction of the cylinder 310 is the upward-downward direction. The mold clamping unit combined with the first injection unit 301 of the vertical type may be the vertical type or the horizontal type. Similarly, the mold clamping unit combined with the first injection unit 301 of the horizontal type may be the horizontal type or the vertical type.

### First Moving Unit and Second Moving Unit

In describing the first moving unit 401 and the second moving unit (not illustrated), similarly to the description of the first injection unit 301 and the second injection unit 302, a moving direction of the screw 330 during the filling (for example, the negative direction of the X-axis) will be defined as forward, and a moving direction of the screw 330 during the plasticizing (for example, the positive direction of the X-axis) will be defined as rearward.

The first moving unit 401 advances and retreats the first injection unit 301 with respect to the mold unit 800. In addition, the first moving unit 401 presses the nozzle 320 of the first injection unit 301 against the mold unit 800, thereby generating a nozzle touch pressure.

The second moving unit advances and retreats the second injection unit 302 with respect to the mold unit 800. In addition, the second moving unit presses the nozzle of the second injection unit 302 against the mold unit 800, thereby generating a nozzle touch pressure.

The first moving unit 401 and the second moving unit are disposed at an interval in the Y-axial direction. The first moving unit 401 and the second moving unit independently advance and retreat the first injection unit 301 and the second injection unit 302.

The first moving unit 401 and the second moving unit are configured in the same manner. Therefore, hereinafter, the configuration of the first moving unit 401 will be described, and the configuration of the second moving unit will be omitted in the description. The first moving unit 401 includes a hydraulic pump 410, a motor 420 serving as a drive source, and a hydraulic cylinder 430 serving as a hydraulic actuator (refer to FIGS. 1 and 2).

The hydraulic pump 410 has a first port 411 and a second port 412. The hydraulic pump 410 is a pump that can rotate in both directions, and switches rotation directions of the motor 420. In this manner, a hydraulic fluid (for example, oil) is sucked from any one of the first port 411 and the second port 412, and is discharged from the other to generate a hydraulic pressure. The hydraulic pump 410 can suction the hydraulic fluid from a tank, and can discharge the hydraulic fluid from any one of the first port 411 and the second port 412.

The motor 420 operates the hydraulic pump 410. The motor 420 drives the hydraulic pump 410 in a rotation direction and with a rotation torque in accordance with a control signal transmitted from the control device 700. The motor 420 may be an electric motor, or may be an electric servo motor.

The hydraulic cylinder 430 has a cylinder body 431, a piston 432, and a piston rod 433. The cylinder body 431 is fixed to the first injection unit 301. The piston 432 partitions the inside of the cylinder body 431 into a front chamber 435 serving as a first chamber and a rear chamber 436 serving as a second chamber. The piston rod 433 is fixed to the stationary platen 110.

The front chamber 435 of the hydraulic cylinder 430 is connected to the first port 411 of the hydraulic pump 410 via a first flow path 413. The hydraulic fluid discharged from the first port 411 is supplied to the front chamber 435 via the first flow path 413. In this manner, the first injection unit 301 is pressed forward. The first injection unit 301 is advanced, and the nozzle 320 of the first injection unit 301 is pressed against the stationary die 810. The front chamber 435 functions as a pressure chamber that generates the nozzle touch pressure of the nozzle 320 by the pressure of the hydraulic fluid supplied from the hydraulic pump 410.

On the other hand, the rear chamber 436 of the hydraulic cylinder 430 is connected to the second port 412 of the hydraulic pump 410 via a second flow path 414. The hydraulic fluid discharged from the second port 412 is supplied to the rear chamber 436 of the hydraulic cylinder 430 via the second flow path 414. In this manner, the first injection unit 301 is pressed rearward. The first injection unit 301 is retreated, and the nozzle 320 of the first injection unit 301 is separated from the stationary die 810.

In the present embodiment, the first moving unit 401 includes the hydraulic cylinder 430, but the present invention is not limited thereto. For example, instead of the hydraulic cylinder 430, an electric motor and a motion conversion mechanism that converts a rotary motion of the electric motor into a linear motion of the first injection unit 301 may be used.

### Control Device

For example, the control device 700 is configured to include a computer, and includes a central processing unit (CPU) 701, a storage medium 702 such as a memory, an input interface 703, and an output interface 704, as illustrated in FIGS. 1 and 2. The control device 700 performs various types of control by causing the CPU 701 to execute a program stored in the storage medium 702. In addition, the control device 700 receives a signal from the outside through the input interface 703, and transmits the signal to the outside through the output interface 704.

The control device 700 repeatedly performs the plasticizing process, the mold closing process, the pressurizing process, the mold clamping process, the filling process, the holding pressure process, the cooling process, the depressurizing process, the mold opening process, the ejection process, and the mold rotating process, thereby repeatedly manufacturing the molding product. A series of operations for obtaining the molding product, for example, an operation from the start of the plasticizing process to the start of the subsequent plasticizing process will be referred to as a "shot" or a "molding cycle". In addition, a time required for one shot will be referred to as a "molding cycle time" or a "cycle time".

For example, in one molding cycle, the plasticizing process, the mold closing process, the pressurizing process, the mold clamping process, the filling process, the holding pressure process, the cooling process, the depressurizing process, the mold opening process, the ejection process, and the mold rotating process are performed in this order. The order described here is the order of the start times of the respective processes. The filling process, the holding pressure process, and the cooling process are performed during the mold clamping process. The start of the mold clamping process may coincide with the start of the filling process. Completion of the depressurizing process coincides with start of the mold opening process.

A plurality of processes may be performed at the same time in order to shorten the molding cycle time. For example, the plasticizing process may be performed during the cooling process of the previous molding cycle or may be performed during the mold clamping process. In this case, the mold closing process may be performed in an initial stage of the molding cycle. In addition, the filling process may start during the mold closing process. In addition, the ejection process may start during the mold opening process. When an on-off valve for opening and closing the flow path of the nozzle 320 is provided, the mold opening process may start during the plasticizing process. The reason is as follows. Even when the mold opening process starts during the plasticizing process, when the on-off valve closes the flow path of the nozzle 320, the molding material does not leak from the nozzle 320.

One molding cycle may include a process other than the plasticizing process, the mold closing process, the pressurizing process, the mold clamping process, the filling process, the holding pressure process, the cooling process, the depressurizing process, the mold opening process, the ejection process, and the mold rotating process.

For example, after the holding pressure process is completed and before the plasticizing process starts, a pre-plasticizing suck-back process of retreating the screw 330 to a preset plasticizing start position may be performed. The pressure of the molding material accumulated in front of the screw 330 before the plasticizing process starts can be reduced, and it is possible to prevent the screw 330 from being rapidly retreated when the plasticizing process starts.

In addition, after the plasticizing process is completed and before the filling process starts, a post-plasticizing suck-back process may be performed in which the screw 330 is retreated to a preset filling start position (also referred to as an "injection start position") . The pressure of the molding material accumulated in front of the screw 330 before the filling process starts can be reduced, and it is possible to prevent a leakage of the molding material from the nozzle 320 before the filling process starts.

The control device 700 is connected to an operation unit 750 that receives an input operation of a user, and a display unit 760 that displays a screen. For example, the operation unit 750 and the display unit 760 may be configured to include a touch panel 770, and may be integrated with each other. The touch panel 770 serving as the display unit 760 displays the screen under the control of the control device 700. For example, the screen of the touch panel 770 may display information such as settings of the injection molding machine 10 and a current state of the injection molding machine 10. In addition, for example, the screen of the touch panel 770 may display a button for receiving the input operation of the user or an operation unit such as an input column. The touch panel 770 serving as the operation unit 750 detects an input operation of the user on the screen, and outputs a signal corresponding to the input operation to the control device 700. In this manner, for example, while confirming information displayed on the screen, the user can perform settings (including an input of a set value) of the injection molding machine 10 by operating the operation unit provided on the screen. In addition, the user can operate the inj ection molding machine 10 corresponding to the operation unit by operating the operation unit provided on the screen. For example, the operation of the injection molding machine 10 may be the operations (including stopping) of the mold clamping unit 100, the first ejector unit 201, the second ejector unit 202, the first injection unit 301, the second injection unit 302, the first moving unit 401, and the second moving unit. In addition, the operation of the injection molding machine 10 may be switching between the screens displayed on the touch panel 770 serving as the display unit 760.

A case has been described in which the operation unit 750 and the display unit 760 of the present embodiment are integrated with each other as the touch panel 770. However, both of these may be independently provided. In addition, a plurality of the operation units 750 may be provided. The operation unit 750 and the display unit 760 are disposed on the operation side (negative direction of the Y-axis) of the mold clamping unit 100 (more specifically, the stationary platen 110).

### Separation Control of Molding Product

As illustrated in FIG. 5, the movable platen 120 includes a front surface plate 121, an intermediate block 124, a rear block 126, and a toggle link attachment portion 128. The front surface plate 121, the intermediate block 124, the rear block 126, and the toggle link attachment portion 128 may be separately formed and connected to each other, or may be integrally formed by means of casting.

The front surface plate 121 supports the rotary table 190 to be rotatable. The front surface plate 121 has a first through-hole 122 in which the first ejector rod 211 is disposed to be freely advanced and retreated. Similarly, the front surface plate 121 has a second through-hole 123 in which the second ejector rod 212 is disposed to be freely advanced and retreated.

The intermediate block 124 is disposed inside in the radial direction of the cylindrical rotation cylinder 195 extending rearward from the outer peripheral portion of the rotary table 190. A space in which the first ejector unit 201 is disposed and a space in which the second ejector unit 202 is disposed are formed inside the intermediate block 124 (refer to FIG. 7) . The front surface plate 121 is attached to a front end surface of the intermediate block 124. As illustrated by a broken line in FIG. 7, the front surface plate 121 and the intermediate block 124 have an insertion hole 125 into which the rotary shaft 191 of the rotary table 190 is inserted via the bearing 199.

The rear block 126 supports the driven gear 196 to be rotatable. The rear block 126 is formed in a rectangular shape when viewed in the X-axial direction (refer to FIG. 3). Each of four corner portions of the rear block 126 has a through-hole 127 into which the tie bar 140 is inserted. A cutout may be formed instead of the through-hole 127. A space in which the first ejector unit 201 is disposed and a space in which the second ejector unit 202 is disposed are formed inside the rear block 126 (refer to FIG. 7).

A pair of the toggle link attachment portions 128 are provided at an interval in the Z-axial direction in a central portion in the Y-axial direction of a rear end surface of the rear block 126. Each of the pair of toggle link attachment portions 128 has a plurality of toggle link attachment plates perpendicular to the Y-axial direction at an interval in the Y direction. Each of the plurality of toggle link attachment plates is ejected rearward from the rear end surface of the rear block 126, and has a pin hole 129 in a tip portion thereof. A pin is inserted into the pin hole 129, and the first link 152 (refer to FIGS. 1 and 2) is oscillatingly attached to the toggle link attachment portion 128 via the pin.

As illustrated in FIG. 4, when the mold clamping is performed, the first movable molding surface 821 and the first stationary molding surface 811 form the first cavity space 801, and the second movable molding surface 822 and the second stationary molding surface 812 form the second cavity space 802 . The molding material is supplied from the first injection unit 301 to the first cavity space 801, and the first molding product 21 is molded.

As illustrated in FIG. 4, the first molding product 21 is molded in the first cavity space 801 when the mold clamping is performed, and is rotated together with the movable die 820 by 180° without being ejected from the movable die 820 when the mold opening is performed as illustrated in FIG. 5. Thereafter, when the mold clamping is performed as illustrated in FIG. 6, the first molding product 21 is disposed in a portion of the second cavity space 802, and becomes a portion of the second molding product 22.

When the mold clamping is performed as illustrated in FIG. 6, the second movable molding surface 822 and the first stationary molding surface 811 form the first cavity space 801, and the first movable molding surface 821 and the second stationary molding surface 812 form the second cavity space 802. The molding material is supplied from the second injection unit 302 to the second cavity space 802, and the second molding product 22 is molded. Concurrently with the molding of the second molding product 22, the molding material is supplied from the first injection unit 301 to the first cavity space 801, and the first molding product 21 is molded. Thereafter, the mold opening illustrated in FIG. 8 is performed.

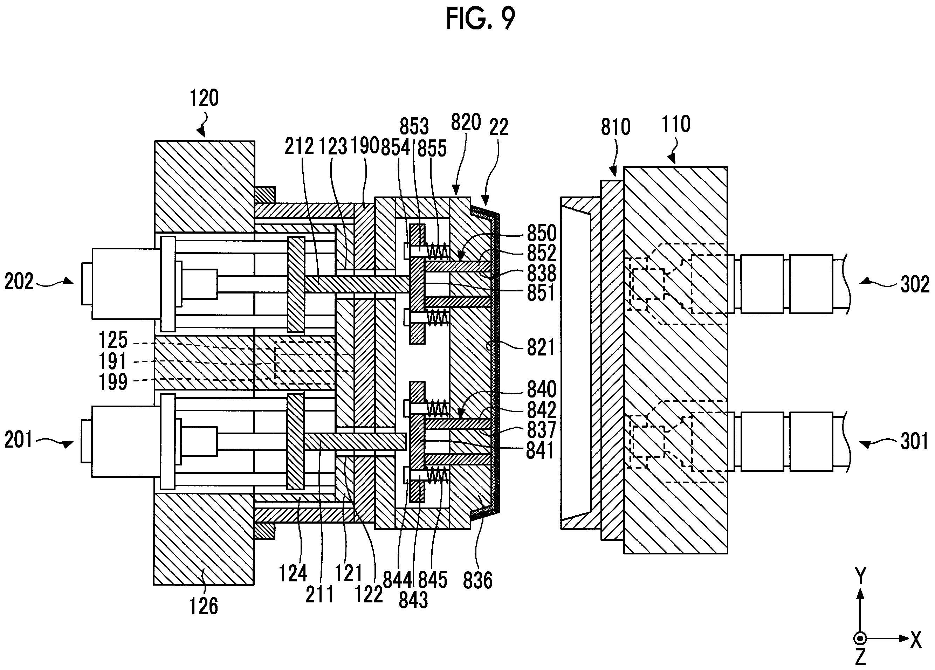

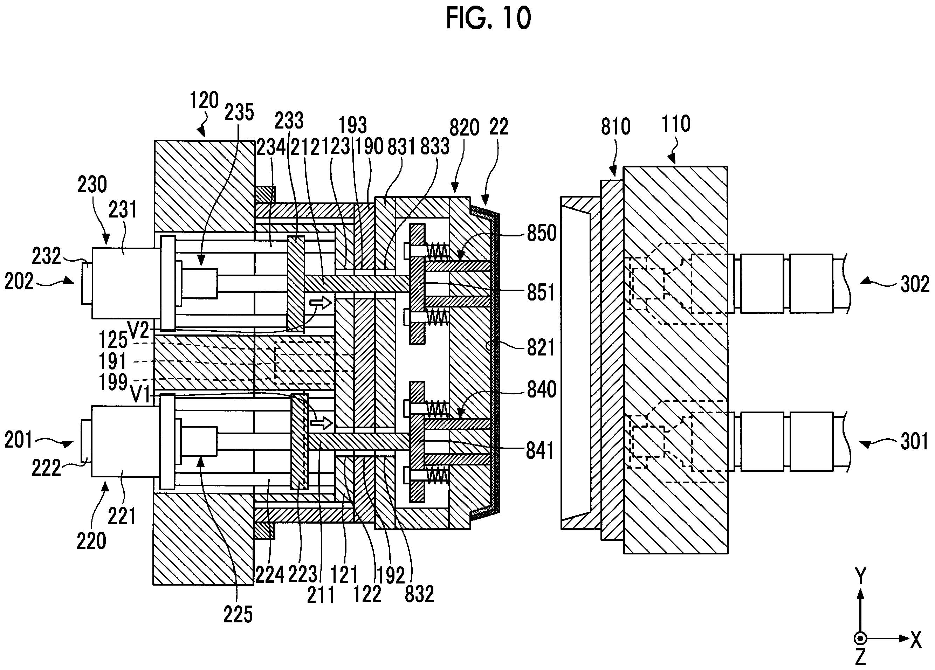

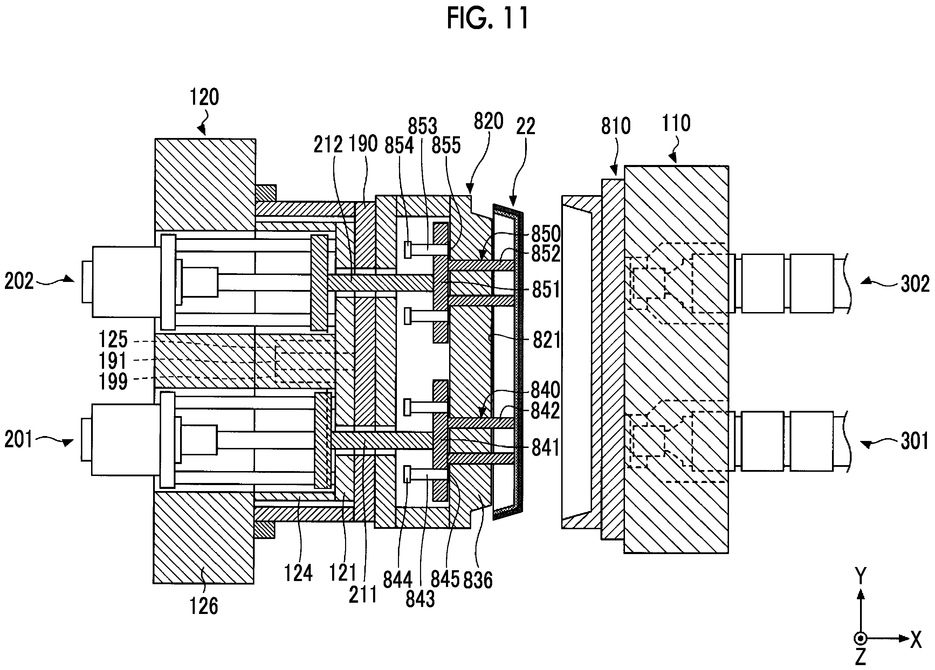

FIG. 8 is a sectional view illustrating an example of a state of the injection molding machine when the mold opening is performed. FIG. 9 is a sectional view illustrating an example of a state of the injection molding machine when the second ejector rod abuts on the second ejector plate before the first ejector rod abuts on the first ejector plate. FIG. 10 is a sectional view illustrating an example of a state of the injection molding machine when the first ejector rod abuts on the first ejector plate and at the same time, the second ejector rod abuts on the second ejector plate. FIG. 11 is a sectional view illustrating an example of a state of the injection molding machine when the first ejector rod and the second ejector rod are located at ejection positions. The X-axial direction, the Y-axial direction, and the Z-axial direction in FIGS. 8 to 11 are directions the same as the X-axial direction, the Y-axial direction, and the Z-axial direction in FIGS. 1 and 2.

As illustrated in FIG. 8, the movable die 820 includes the stationary portion 830 that cannot be advanced and retreated with respect to the movable platen 120, the first movable portion 840 that can be advanced and retreated with respect to the movable platen 120, and the second movable portion 850 that can be advanced and retreated with respect to the movable platen 120.

The stationary portion 830 of the movable die 820 includes a movable attachment plate 831 attached to the rotary table 190, a spacer block 835 forming a space 834 in front of the movable attachment plate 831, and a movable die plate 836 fixed to the movable attachment plate 831 via the spacer block 835.

The movable attachment plate 831 has a first through-hole 832 which the first ejector rod 211 is inserted into and removed from. A plurality of the first through-holes 832 are formed around the rotation center line 190X of the rotary table 190 (refer to FIG. 3) . The plurality of first through-holes 832 are disposed in rotational symmetry, for example, 180 ° rotational symmetry.

Similarly, the movable attachment plate 831 has a second through-hole 833 which the second ejector rod 212 is inserted into and removed from. A plurality of second through-holes 833 are formed around the rotation center line 190X of the rotary table 190 (refer to FIG. 3). The plurality of second through-holes 833 are rotationally symmetrically disposed, and is rotationally symmetrically disposed by 180°, for example.

The spacer block 835 forms the space 834 between the movable attachment plate 831 and the movable die plate 836. A first ejector plate 841 (to be described later) and a second ejector plate 851 (to be described later) are disposed to be freely advanced and retreated in the space 834.

The movable die plate 836 includes the first movable molding surface 821 and the second movable molding surface 822 on a surface facing the stationary die 810. The first movable molding surface 821 and the second movable molding surface 822 respectively and sequentially form a portion of the wall surface of the first cavity space 801 and a portion of the wall surface of the second cavity space 802 (refer to FIGS. 4 and 6).

As illustrated in FIG. 9, the first movable portion 840 of the movable die 820 includes the first ejector plate 841 disposed perpendicular to the X-axial direction and a rod-shaped first ejector pin 842 extending forward from the first ejector plate 841.

The first ejector plate 841 is advanced and retreated along the first guide pin 843. A front end portion of the first guide pin 843 is attached to the movable die plate 836. On the other hand, a first stopper 844 for stopping the retreat of the first ejector plate 841 is attached to a rear end portion of the first guide pin 843.

The first ejector plate 841 is biased from the movable die plate 836 toward the first stopper 844 by a first return spring 845. The movable attachment plate 831 may also serve as the first stopper 844. In this case, the rear end portion of the first guide pin 843 is attached to the movable attachment plate 831.

The first ejector pin 842 is disposed to be freely advanced and retreated in the first through-hole 837 penetrating the movable die plate 836. The first through-hole 837 is formed in each of the first movable molding surface 821 and the second movable molding surface 822 (refer to FIG. 3).

The first ejector plate 841 is pressed against the first stopper 844 by a biasing force of the first return spring 845. In this case, a front end surface of the first ejector pin 842 is flush with the first movable molding surface 821 or the second movable molding surface 822.

The first ejector plate 841 is advanced against the biasing force of the first return spring 845. In this case, the front end surface of the first ejector pin 842 is ejected forward from the first movable molding surface 821 or the second movable molding surface 822.

A plurality of the first movable portions 840 are disposed so that the second molding product 22 is independently separated from the first movable molding surface 821 and the second molding product 22 is independently separated from the second movable molding surface 822. The plurality of first movable portions 840 are rotationally symmetrically disposed around the rotation center line 190X of the rotary table 190, and are rotationally symmetrically disposed by 180°, for example.

As illustrated in FIG. 9, the second movable portion 850 of the movable die 820 includes the second ejector plate 851 disposed perpendicular to the X-axial direction and a rod-shaped second ejector pin 852 extending forward from the second ejector plate 851.

The second ejector plate 851 is advanced and retreated along the second guide pin 853. A front end portion of the second guide pin 853 is attached to the movable die plate 836. On the other hand, a second stopper 854 for stopping the retreat of the second ejector plate 851 is attached to a rear end portion of the second guide pin 853.

The second ejector plate 851 is biased from the movable die plate 836 toward the second stopper 854 by a second return spring 855. The movable attachment plate 831 may also serve as the second stopper 854. In this case, the rear end portion of the second guide pin 853 is attached to the movable attachment plate 831.

The second ejector pin 852 is disposed to be freely advanced and retreated in the second through-hole 838 penetrating the movable die plate 836. The second through-hole 838 is formed in each of the first movable molding surface 821 and the second movable molding surface 822 (refer to FIG. 3).

The second ejector plate 851 is pressed against the second stopper 854 by the biasing force of the second return spring 855. In this case, the front end surface of the second ejector pin 852 is flush with the first movable molding surface 821 or the second movable molding surface 822.

The second ejector plate 851 is advanced against the biasing force of the second return spring 855. In this case, the front end surface of the second ejector pin 852 is ejected forward from the first movable molding surface 821 or the second movable molding surface 822.

A plurality of the second movable portions 850 are disposed so that the second molding product 22 is independently separated from the first movable molding surface 821 and the second molding product 22 is independently separated from the second movable molding surface 822. The plurality of second movable portions 850 are rotationally symmetrically disposed around the rotation center line 190X of the rotary table 190, and are rotationally symmetrically disposed by 180°, for example.

The first ejector plate 841 of the first movable portion 840 and the second ejector plate 851 of the second movable portion 850 are individually provided in the present embodiment, but may be integrally formed. Any configuration can be adopted as long as the second molding product 22 is independently separated from the first movable molding surface 821 and the second molding product 22 is independently separated from the second movable molding surface 822.

As illustrated in FIG. 10, the first ejector unit 201 includes a first drive mechanism 220 that advances and retreats the first ejector rod 211 with respect to the movable platen 120. For example, the first drive mechanism 220 includes a first ejector motor 221 and a first motion conversion mechanism 225 that converts a rotary motion of the first ejector motor 221 into a linear motion of the first crosshead 223.

The first motion conversion mechanism 225 includes a screw shaft and a screw nut screwed to the screw shaft. A ball or a roller may be interposed between the screw shaft and the screw nut. The rear end portion of the first ejector rod 211 is attached to the first crosshead 223, and the first ejector rod 211 is advanced and retreated together with the first crosshead 223.

The first drive mechanism 220 includes a guide bar 224 that guides the first crosshead 223. The front end portion of the guide bar 224 is attached to the front surface plate 121 of the movable platen 120. The first ejector rod 211 is disposed to be freely advanced and retreated in the first through-hole 122 of the front surface plate 121 of the movable platen 120.

The first drive mechanism 220 advances the first ejector rod 211 from the standby position (refer to FIG. 8), and inserts the first ejector rod 211 into the first through-hole 192 of the rotary table 190. A plurality of the first through-holes 192 are formed around the rotation center line 190X of the rotary table 190. The plurality of first through-holes 192 are rotationally symmetrically disposed, and are rotationally symmetrically disposed by 180°, for example (refer to FIG. 3) .

Subsequently, the first drive mechanism 220 further advances the first ejector rod 211, inserts the first ejector rod 211 into the first through-hole 832 of the movable attachment plate 831 of the movable die 820, and abuts on the first ejector plate 841 of the movable die 820 (refer to FIG. 10).

Subsequently, the first drive mechanism 220 further advances the first ejector rod 211 to the ejection position (refer to FIG. 11), and advances the first ejector plate 841 and the first ejector pin 842. The front end surface of the first ejector pin 842 is ejected forward from the first movable molding surface 821 or the second movable molding surface 822 of the movable die 820, and the second molding product 22 is separated from the first movable molding surface 821 or the second movable molding surface 822.

Thereafter, the first drive mechanism 220 retreats the first ejector rod 211 from the ejection position (refer to FIG. 11), and pulls out the first ejector rod 211 from the first through-hole 832 of the movable attachment plate 831 of the movable die 820. As a result, the first return spring 845 retreats the first ejector plate 841 to the first stopper 844.

Subsequently, the first drive mechanism 220 retreats the first ejector rod 211 to the standby position (refer to FIG. 8), and pulls out the first ejector rod 211 from the first through-hole 192 of the rotary table 190. In this state, the rotary table 190 is rotated by 180°.

The control device 700 controls the position of the first ejector rod 211, when the first ejector rod 211 is advanced from the standby position to the ejection position. The control device 700 supplies a current to the first ejector motor 221, based on a deviation ΔX1 (ΔX1=X1s-X1d) between a set value X1s of the position of the first ejector rod 211 and a detection value X1d of the position of the first ejector rod 211.

For example, the position of the first ejector rod 211 is detected by using a first ejector motor encoder 222. The first ejector motor encoder 222 detects the rotation of the first ejector motor 221, and transmits a signal indicating a detection result thereof to the control device 700. The first ejector rod position detector that detects the position of the first ejector rod 211 is not limited to the first ejector motor encoder 222, and a general detector can be used.

As illustrated in FIG. 10, the second ejector unit 202 includes a second drive mechanism 230 that advances and retreats the second ejector rod 212 with respect to the movable platen 120. For example, the second drive mechanism 230 includes a second ejector motor 231 and a second motion conversion mechanism 235 that converts a rotary motion of the second ejector motor 231 into a linear motion of the second crosshead 233.

The second motion conversion mechanism 235 includes a screw shaft and a screw nut screwed to the screw shaft. A ball or a roller may be interposed between the screw shaft and the screw nut. The rear end portion of the second ejector rod 212 is attached to the second crosshead 233, and the second ejector rod 212 is advanced and retreated together with the second crosshead 233.

The second drive mechanism 230 includes a guide bar 234 that guides the second crosshead 233. The front end portion of the guide bar 234 is attached to the front surface plate 121 of the movable platen 120. The second ejector rod 212 is disposed to be freely advanced and retreated in the second through-hole 123 of the front surface plate 121 of the movable platen 120.

The second drive mechanism 230 and the first drive mechanism 220 are independently provided, and the second crosshead 233 and the first crosshead 223 are independently advanced and retreated. Compared to a case where the second crosshead 233 and the first crosshead 223 are integrally formed, that is, compared to a case where one ejector unit is used, the crosshead can be miniaturized, and the driving force of the crosshead can be reduced. In addition, a general-purpose motor can be used as the ejector motor.

The second drive mechanism 230 advances the second ejector rod 212 from the standby position (refer to FIG. 8), and inserts the second ejector rod 212 into the second through-hole 193 of the rotary table 190. A plurality of the second through-holes 193 are formed around the rotation center line 190X of the rotary table 190. The plurality of second through-holes 193 are rotationally symmetrically disposed, and are rotationally symmetrically disposed by 180°, for example (refer to FIG. 3) .

Subsequently, the second drive mechanism 230 further advances the second ejector rod 212, inserts the second ejector rod 212 into the second through-hole 833 of the movable attachment plate 831 of the movable die 820, and abuts on the second ejector plate 851 of the movable die 820 (refer to FIGS. 9 and 10).

Subsequently, the second drive mechanism 230 further advances the second ejector rod 212 to the ejection position (refer to FIG. 11), and advances the second ejector plate 851 and the second ejector pin 852. The front end surface of the second ejector pin 852 is ejected forward from the first movable molding surface 821 or the second movable molding surface 822 of the movable die 820, and the second molding product 22 is separated from the first movable molding surface 821 or the second movable molding surface 822. The separated second molding product 22 is unloaded outward of the injection molding machine 10.

Thereafter, the second drive mechanism 230 retreats the second ejector rod 212 from the ejection position (refer to FIG. 11), and pulls out the second ejector rod 212 from the second through-hole 833 of the movable attachment plate 831 of the movable die 820. As a result, the second return spring 855 retreats the second ejector plate 851 to the second stopper 854.

Subsequently, the second drive mechanism 230 retreats the second ejector rod 212 to the standby position (refer to FIG. 8), and pulls out the second ejector rod 212 from the second through-hole 193 of the rotary table 190. In this state, the rotary table 190 is rotated by 180°.

The control device 700 controls the position of the second ejector rod 212, when the second ejector rod 212 is advanced from the standby position to the ejection position. The control device 700 supplies a current to the second ejector motor 231, based on a deviation ΔX2 (ΔX2=X2s-X2d) between a set value X2s of the position of the second ejector rod 212 and a detection value X2d of the position of the second ejector rod 212.

For example, the position of the second ejector rod 212 is detected by using a second ejector motor encoder 232. The second ejector motor encoder 232 detects the rotation of the second ejector motor 231, and transmits a signal indicating a detection result thereof to the control device 700. The second ejector rod position detector that detects the position of the second ejector rod 212 is not limited to the second ejector motor encoder 232, and a general detector can be used.

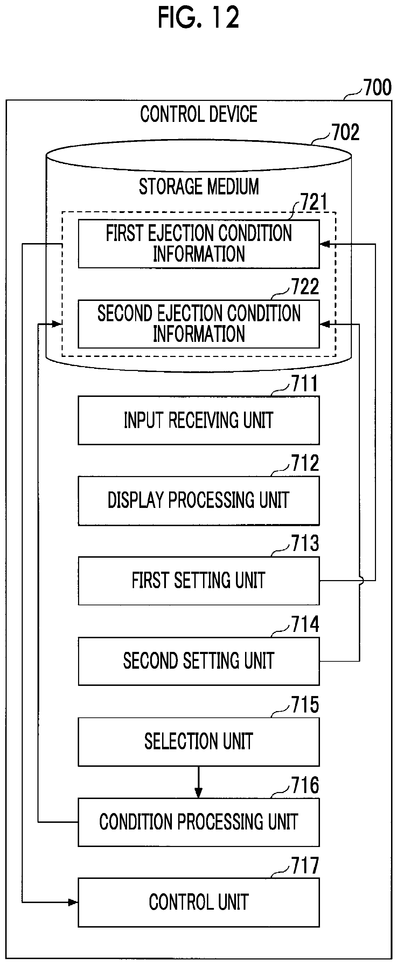

FIG. 12 is a functional block view illustrating components of the control device according to an embodiment. Each functional block illustrated in FIG. 12 is conceptual, and may not necessarily be configured to be physical as illustrated. All or a portion of each functional block can be configured to be functionally or physically distributed and integrated in any desired unit. All or any desired portion of each processing function performed in each functional block may be realized by a program executed by a CPU, or may be realized as hardware by a wired logic. As illustrated in FIG. 12, the control device 700 includes an input receiving unit 711, a display processing unit 712, a first setting unit 713, a second setting unit 714, a selection unit 715, a condition processing unit 716, and a control unit 717, controls the first ejector unit 201, and controls the second ejector unit 202. The input receiving unit 711 receives an input operation of a user from the operation unit 750 via an input interface 703. The display processing unit 712 performs display control for displaying a display screen corresponding to the input operation in the operation unit 750 on the display unit 760. The first setting unit 713 sets first ejection condition information 721 (example of a first ejection condition) for controlling the first ejector unit 201. The second setting unit 714 sets second ejection condition information 722 (example of a second ejection condition) for controlling the second ejector unit 202. The selection unit 715 selects a simultaneous ejection mode (example of a first mode) in which the first ejector unit 201 and the second ejector unit 202 perform an ejection operation in synchronization with each other. When the simultaneous ejection mode is selected (example of a case where a predetermined condition is satisfied), the condition processing unit 716 copies the first ejection condition information 721 set by the first setting unit 713 to the second ejection condition information 722. The control unit 717 controls the first ejector unit 201 and the second ejector unit 202. When the simultaneous ejection mode is selected, the control unit 717 controls the first ejector unit 201 for the same molding product by using the first ejection condition information 721, and controls the second ejector unit 202 by using the second ejection condition information 722 (example of the same condition as the first ejection condition) to which the first ejection condition information 721 is copied. Specific description of each configuration will be described later.

In addition, a storage medium 702 of the control device 700 includes the first ejection condition information 721 and the second ejection condition information 722.

The first ejection condition information 721 is information indicating setting for controlling the first ejector unit 201 that ejects the first ejector rod 211 from the movable die 820 to eject the molding product molded in the cavity space formed between the stationary die 810 (example of the first die) and the movable die 820 (example of the second die).

The second ejection condition information 722 is information indicating setting for controlling the second ejector unit 202 that ejects the second ejector rod 212 from the movable die 820 to eject the molding product molded in the cavity space formed between the stationary die 810 (example of the first die) and the movable die 820 (example of the second die) .

An individual physical quantity included in the first ejection condition information 721 and the second ejection condition information 722 needs to be appropriately set depending on the molding product. For example, when an elongated component is molded, it is necessary to perform simultaneous ejection control on the first ejector unit 201 and the second ejector unit 202. The first ejection condition information 721 and the second ejection condition information 722 include various physical quantities such as an ejection timing, an ejection speed, an ejection position, and an ejection pressure. Then, in order to perform simultaneous ejection, the first ejection condition information 721 and the second ejection condition information 722 need to coincide with each other with regard to the plurality of physical quantities. Therefore, while a user refers to a display screen displayed on the display unit 760, the user needs to operate the operation unit 750 to set a proper physical quantity in order to perform the simultaneous ejection control. Hereinafter, the physical quantity in which setting is changed will be referred to as a parameter.

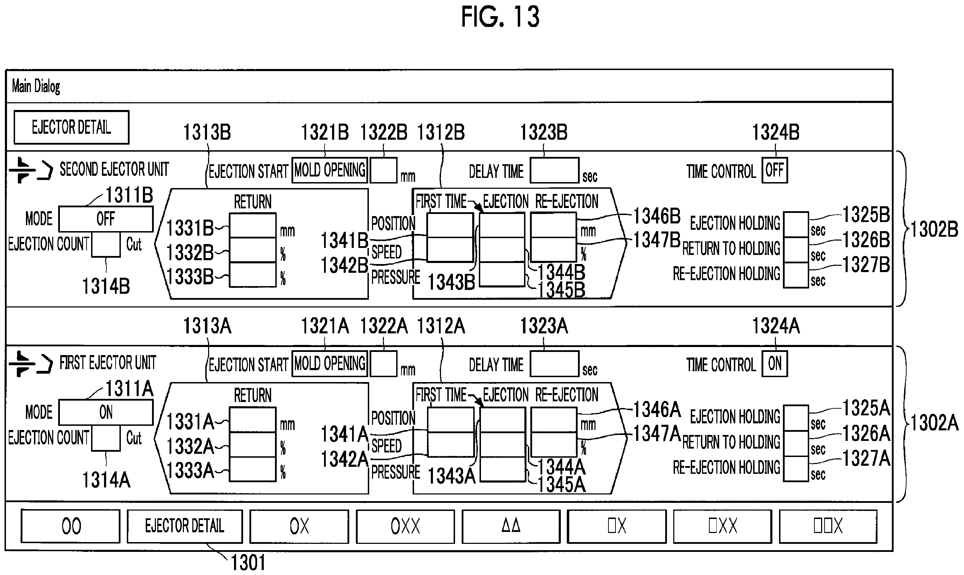

FIG. 13 is a view illustrating an example of a display screen displayed on the display unit 760 by the display processing unit 712 of the control device 700 according to an embodiment. The display screen illustrated in FIG. 13 is displayed when the input receiving unit 711 receives a pressing operation of an ejector detail button 1301 out of a plurality of buttons displayed in a lower portion of the input receiving unit 711.

On the display screen, a first display region 1302A indicates the parameter included in the first ejection condition information 721, and a second display region 1302B indicates the parameter included in the second ejection condition information 722.

In order to control the first ejector unit 201, the first display region 1302A in FIG. 13 includes a mode column 1311A, an ejection column 1312A, a return column 1313A, an ejection count column 1314A, and an ejection start process column 1321A, an ejection start position column 1322A, an ejection start delay time column 1323A, a time control column 1324A, an ejection holding column 1325A, a return holding column 1326A, and a re-ejection holding column 1327A.

In the mode column 1311A, an operation mode of the first ejector unit 201 is selected. In the operation mode, it is possible to select any one from "On", "Off", and "Simultaneous Ejection". "On" indicates that the first ejector unit 201 is operated, "Off" indicates that the first ejector unit 201 is not operated, and "Simultaneous Ejection" indicates that simultaneous ejection control is performed on the first ejector unit 201 and the second ejector unit 202. The simultaneous ejection control will be described later.

In the ejection count column 1314A, the number of ejection control times of the first ejector unit 201 is set.

The ejection start process column 1321A, the ejection start position column 1322A, and the delay time column 1323A are provided to set information relating to a timing at which the first ejector unit 201 starts the ejection control. The ejection start process column 1321A is provided to set a process for starting the ejection control of the first ejector unit 201. For example, when "mold opening" is set, the column indicates that the ejection control starts by regarding the mold opening process as a trigger. The ejection start position column 1322A is provided to set a position serving as a trigger for starting the ejection control of the first ejector unit 201. For example, when "mold opening" is set in the ejection start process column 1321A, the column indicates that the first ejector unit 201 starts the ejection control when the crosshead 151 moves to a position set in the ejection start position column 1322A in the mold opening process. The delay time column 1323A is provided to set a standby time until the ejection control is actually performed after conditions set in the ejection start process column 1321A and the ejection start position column 1322A are satisfied.

The time control column 1324A, the ejection holding column 1325A, the return holding column 1326A, and the re-ejection holding column 1327A are provided to set information for performing time control when the ejection operation is performed on the first ejector unit 201. In the time control column 1324A, it is possible to select "On" or "Off". In a case of "On", the column indicates that the time control set in the ejection holding column 1325A, the return holding column 1326A, and the re-ejection holding column 1327A is performed. In a case of "Off", the column indicates that the time control set in the ejection holding column 1325A, the return holding column 1326A, and the re-ejection holding column 1327A is not performed.

The ejection holding column 1325A is provided to set a time for holding an ejection state after first ejection control of the first ejector unit 201 is performed. The return holding column 1326A is provided to set a time for holding a return state after return control of the first ejector unit 201 is performed. The re-ejection holding column 1327A is provided to set a time for holding the ejection state after second and subsequent ejection control is performed.

The ejection column 1312A includes a first position column 1341A for the first ejection control, a first speed column 1342A for the first ejection control, a second position column 1343A for the first ejection control, a second speed column 1344A for the first ejection control, a pressure column 1345A, a position column 1346A for the second and subsequent ejection control, and a speed column 1347A for the second and subsequent ejection control. The position of the first ejector rod 211 on which the ejection control is performed by the first ejector unit 201 is set in the first position column 1341A for the first ejection control, the second position column 1343A for the first ejection control, and the position column 1346A for the second and subsequent ejection control. The speed of the first ejector rod 211 on which the ejection control is performed by the first ejector unit 201 is set in the first speed column 1342A for the first ejection control, the second speed column 1344A for the first ejection control, and the speed column 1347A for the second and subsequent ejection control. The pressure column 1345A is provided to set an upper limit pressure when the ejection control is performed by the first ejector unit 201. In the present embodiment, the pressure is indicated by using a ratio (percentage) to a rated pressure of the first ejector unit 201. However, the pressure may be indicated by using a specific numerical value.

The position column and the speed column are associated with each other. For example, the columns indicate the followings. When the first ejection control of the first ejector unit 201 is performed, the ejection control is performed up to the position set in the first position column 1341A at the speed set in the first speed column 1342A. Thereafter, the ejection control is performed up to the position set in the second position column 1343A at the speed set in the second speed column 1344A. The columns indicate the second and subsequent ejection control as follows. The ejection control is performed up to the position set in the position column 1346A at the speed set in the speed column 1347A. However, when the first or second and subsequent ejection control of the first ejector unit 201 is performed, in a case where the pressure of the first ejector rod 211 exceeds the upper limit pressure set in the pressure column 1345A, the ejection control is performed at a speed slower than the speed set in the speed column 1347A so that the pressure does not exceed the upper limit pressure.

The return column 1313A includes a return position column 1331A of the first ejector rod 211, a speed column 1332A, and a pressure column 1333A. The position column 1331A is provided to set the position of the first ejector rod 211 on which return control is performed by the first ejector unit 201. The speed column 1332A is provided to set the speed of the first ejector rod 211 on which the return control is performed by the first ejector unit 201. The pressure column 1333A is provided to set the upper limit pressure when the return control is performed by the first ejector unit 201. For example, the columns indicate the followings. When the return control of the first ejector unit 201 is performed, the return control is performed up to the position set in the position column 1331A at the speed set in the speed column 1332A. However, when the return control of the first ejector unit 201 is performed, in a case where the pressure of the first ejector rod 211 exceeds the upper limit pressure set in the pressure column 1333A, the return control is performed at a speed slower than the speed set in the speed column 1332A so that the pressure does not exceed the upper limit pressure.

The first setting unit 713 in FIG. 12 sets a first ejection condition for controlling the first ejector unit 201, when the input receiving unit 711 receives a setting change in the parameter indicated in each column of the first display region 1302A. Specifically, for example, the first setting unit 713 sets the first ejection condition by updating the first ejection condition information 721 with the parameter in which setting is changed in each column of the first display region 1302A.

In order to control the second ejector unit 202, the second display region 1302B in FIG. 13 includes a mode column 1311B, an ejection column 1312B, a return column 1313B, an ejection count column 131BA, an ejection start process column 1321B, an ejection start position column 1322B, an ejection start delay time column 1323B, a time control column 1324B, an ejection holding column 1325B, a return holding column 1326B, and a re-ejection holding column 1327B.

The mode column 1311B, the ejection count column 1314B, the ejection start process column 1321B, the ejection start position column 1322B, the delay time column 1323B, the time control column 1324B, the ejection holding column 1325B, the return holding column 1326B, and the re-ejection holding column 1327B are the columns for controlling the second ejector unit 202, and are the same as the mode column 1311A, the ejection count column 1314A, the ejection start process column 1321A, the ejection start position column 1322A, the delay time column 1323A, the time control column 1324A, the ejection holding column 1325A, the return holding column 1326A, and the re-ejection holding column 1327A which are the columns for controlling the first ejector unit 201. Therefore, description thereof will be omitted.

In the mode column 1311B, as in the mode column 1311A, it is possible to select any one of "On", "Off", and "Simultaneous Ejection". When any one is "On" and the other is "Off", only one ejector unit performs the ejection operation. In addition, even though both the mode column 1311A and the mode column 1311B indicate "On", the simultaneous ejection may not be performed in some cases. For example, it is conceivable to adopt a case where one ejector unit performs the ejection control and the other ejector unit performs gate cut control. In this way, the injection molding machine 10 needs to be set depending on the mold unit 800 to be mounted.

The ejection column 1312B includes a first position column 1341B for the first ejection control, a first speed column 1342B for the first ejection control, a second position column 1343B for the first ejection control, a second speed column 1344B for the first ejection control, a pressure column 1345B, a position column 1346B for the second and subsequent ejection control, and a speed column 1347B for the second and subsequent ejection control. The first position column 1341B for the first ejection control, the first speed column 1342B for the first ejection control, the second position column 1343B for the first ejection control, the second speed column 1344B for the first ejection control, the pressure column 1345B, the position column 1346B for the second and subsequent ejection control, and the speed column 1347B for the second and subsequent ejection control are columns for controlling the second ejector unit 202, and are the same as the first position column 1341A for the first ejection control, the first speed column 1342A for the first ejection control, the second position column 1343A for the first ejection control, the second speed column 1344A for the first ejection control, the pressure column 1345A, the position column 1346A for the second and subsequent ejection control, and the speed column 1347A for the second and subsequent ejection control which are the columns for controlling the first ejector unit 201. Therefore, description thereof will be omitted.

The return column 1313B includes a return position column 1331B of the second ejector rod 212, a speed column 1332B, and a pressure column 1333B. The position column 1331B, the speed column 1332B, and the pressure column 1333B are columns for controlling the first ejector unit 201, except for the column for controlling the second ejector unit 202, and the position column 1331A and the column. The description is omitted as the speed column 1332A and the pressure column 1333A are the same.

The second setting unit 714 in FIG. 12 sets a second ejection condition for controlling the second ejector unit 202, when the input receiving unit 711 receives a setting change in the parameter indicated in each column of the second display region 1302B. Specifically, for example, the second setting unit 714 sets the second ejection condition by updating the second ejection condition information 722 with the parameter in which setting is changed in each column of the second display region 1302B.

Next, a case where "Simultaneous Ejection" is selected as the operation mode in the mode column 1311A will be described. When "Simultaneous Ejection" is selected as the operation mode, the first setting unit 713 updates the first ejection condition information 721 with "Simultaneous Ejection" in which setting is changed to the mode column 1311A of the first display region 1302A.

When setting is changed to "Simultaneous Ejection" in the mode column 1311A of the first display region 1302A, the selection unit 715 selects a simultaneous ejection mode (example of the first mode) in which the first ejector unit 201 and the second ejector unit 202 perform the ejection operation in synchronization with each other.

In the present embodiment, a case will be described where the simultaneous ejection mode is selected when the setting is changed in the mode column 1311A of the first display region 1302A. However, a condition for selects the simultaneous ejection mode is not limited to a case where a user selects "Simultaneous Ejection". For example, the selection unit 715 may selects the operation mode by regarding a fact that the mold unit 800 is mounted on the injection molding machine 10 as a trigger. For example, it is assumed that a two-dimensional code assigned to the mold unit 800 includes information indicating the operation mode. Then, when the mold unit 800 is mounted, an imaging unit provided in the injection molding machine 10 may read the two-dimensional code assigned to the mold unit 800, and the selection unit 715 may select the operation mode, based on the information included in the two-dimensional code.

When the simultaneous ejection mode is selected, the condition processing unit 716 copies the first ejection condition information 721 indicating the first ejection condition set by the first setting unit to the second ejection condition information 722.

The condition processing unit 716 of the present embodiment copies (copies) all of the parameters included in the first ejection condition information 721 to the second ejection condition information 722. Specifically, the condition processing unit 716 copies the operation mode indicated in the mode column 1311A, the parameter for the ejection control indicated in the ejection column 1312A, the parameter for the return control indicated in the return column 1313A, the ejection count indicated in the ejection count column 1314A, the parameters relating to the timing for starting the ejection control indicated in the ejection start process column 1321A, the ejection start position column 1322A, and the ejection start delay time column 1323A, and the parameters for performing the time control during the ejection control indicated in the time control column 1324A, the ejection holding column 1325A, the return holding column 1326A, and the re-ejection holding column 1327A, to the second ejection condition information 722.

Furthermore, the parameters copied to the second ejection condition information 722 include the position, the speed, and the pressure which are used for the ejection control indicated in the ejection column 1312A, and the position, the speed, and the pressure which are used for the return control indicated in the return column 1313A.

That is, in order that the injection molding machine 10 properly performs the ejection control of the molding product, various parameters illustrated in FIG. 13 need to be set in detail in accordance with an ejection target molding product. For example, in order that the first ejector unit 201 and the second ejector unit 202 perform the simultaneous ejection operation for an elongated molding product, the setting of the first ejector unit 201 (parameter of the first display region 1302A) and the setting of the second ejector unit 202 (parameter of the second display region 1302B) need to coincide with each other. However, the number of the parameters increases as described above, thereby causing is a possibility that a setting error or setting forgetting may occur in performing the simultaneous ejection.

Therefore, in the present embodiment, when the simultaneous ejection mode is selected, the condition processing unit 716 copies the first ejection condition information 721 to the second ejection condition information 722. In this manner, it is possible to prevent the setting error or the setting forgetting between the first ejection condition information 721 and the second ejection condition information 722.

The present embodiment provides an example of the parameters to be copied from the first ejection condition information 721 to the second ejection condition information 722, and the parameters to be copied are not limited to the above-described parameters. The parameters to be copied may include parameters other than the above-described parameters. Furthermore, when the first ejector unit 201 and the second ejector unit 202 can perform the simultaneous ejection operation, only one or more of the above-described parameters may be copied.

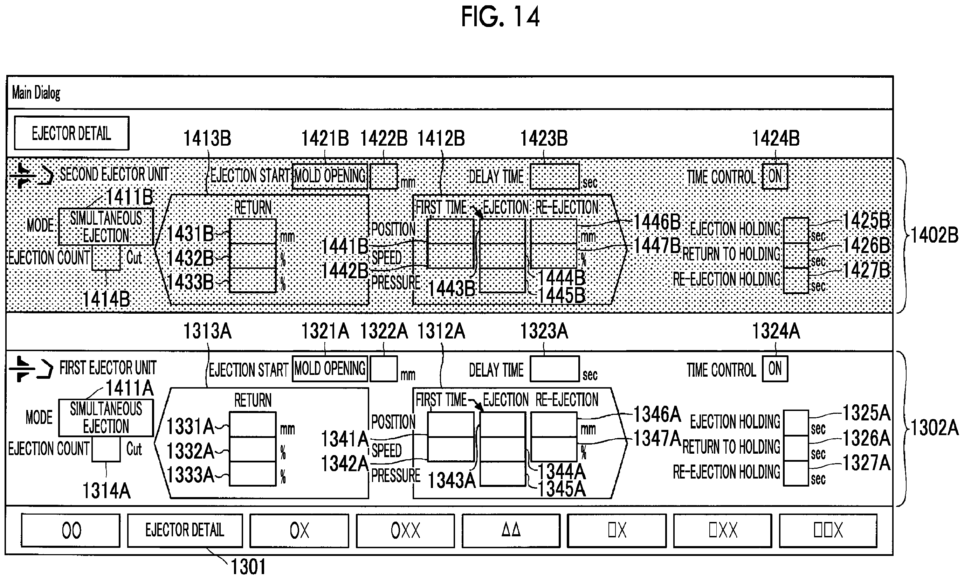

FIG. 14 is a view illustrating an example of the display screen displayed on the display unit 760 when the display processing unit 712 of the control device 700 according to the embodiment selects the simultaneous ejection mode.

When the simultaneous ejection mode is selected, the display processing unit 712 displays the first display region 1302A indicating the first ejection condition in a settable state, and displays the second display region 1402B indicating the second ejection condition in a state where the setting change is suppressed. In the present embodiment, the display mode of the second display region 1402B is changed and displayed so that the state where the setting change is suppressed in the second display region 1402B can be visually recognized. As a method for changing the display mode of the second display region 1402B, any desired method may be used. A background color of the second display region 1402B may be changed, or character colors of various parameters set in the second display region 1402B may be changed. For example, as a change in the character colors, it is conceivable to change the color from a white color to a yellow color.

Various parameters indicated in the first display region 1302A are reflected in the mode column 1411B, the ejection count column 1414B, the ejection start process column 1421B, the ejection start position column 1422B, the ejection start delay time column 1423B, the time control column 1424B, the ejection holding column 1425B, the return holding column 1326B, and the re-ejection holding column 1427B which are displayed in the second display region 1402B.

In addition, various parameters indicated in the ejection column 1312A of the first display region 1302A are reflected in the first position column 1441B for the first ejection control, the first speed column 1442B, the second position column 1443B, the second speed column 1444B, the pressure column 1445B, and the position column 1446B for the second and subsequent ejection control, and the speed column 1447B which are displayed in the ejection column 1412B.

Various parameters indicated in the return column 1313A of the first display region 1302A are reflected in the return position column 1431B of the first ejector rod 211, the speed column 1432B, and the pressure column 1433B which are displayed in the return column 1413B.

When the simultaneous ejection mode is selected, the input receiving unit 711 receives the setting change in the parameters indicated in the various columns displayed in the first display region 1302A, and suppresses receiving the setting change in the parameters indicated in various columns displayed in the second display region 1402B.

In the present embodiment, an example has been described in which the setting change in the parameter indicated in each column of the first display region 1302A is received, and receiving the setting change in the parameter indicated in each column of the second display region 1402B is suppressed. However, the present invention is not limited to the example. For example, the setting change in the parameter indicated in each column of the second display region 1402B may be received, and receiving the setting change in the parameter indicated in each column of the first display region 1302A may be suppressed.

Furthermore, the present invention is not limited to an example of changing the display mode of the display region (first display region 1302A or second display region 1402B) in which receiving the setting change is suppressed, when the simultaneous ejection mode is selected. For example, the display processing unit 712 may not display the display region (first display region 1302A or second display region 1402B) in which receiving the setting change is suppressed.

When the input receiving unit 711 receives the setting change in the parameter indicated in each column of the first display region 1302A after the simultaneous ejection mode is selected, the first setting unit 713 updates the first ejection condition information 721, based on the parameter in which the setting is changed. Then, the condition processing unit 716 copies the updated first ejection condition information 721 to the second ejection condition information 722. In this manner, when the setting is changed after the simultaneous ejection mode is selected, the setting change can be reflected in the first ejector unit 201 and the second ejector unit 202.

The control unit 717 performs the ejection control on the first ejector rod 211 of the first ejector unit 201 in accordance with the first ejection condition information 721, and performs the ejection control on the second ejector rod 212 of the second ejector unit 202 in accordance with the second ejection condition information 722.

When the simultaneous ejection mode is selected, the control unit 717 according to the present embodiment performs the ejection control on the first ejector rod 211 of the first ejector unit 201 for the same molding product by using the first ejection condition information 721, and performs the ejection control on the second ejector rod 212 of the second ejector unit 202, in accordance with the second ejection condition information 722 (the same condition as that indicated in the first ejection condition information 721) to which the first ejection condition information 721 is copied. In this manner, in the present embodiment, the ejection control is performed on the first ejector rod 211 of the first ejector unit 201 and the second ejector rod 212 of the second ejector unit 202, based on the same ejection condition.

In the present embodiment, an example has been described in which the simultaneous ejection control is performed in accordance with the first ejection condition when the simultaneous ejection mode is selected. However, in the present embodiment, the condition under which the simultaneous ejection control is performed is not limited to a case where the simultaneous ejection mode is selected. Any well-known condition may be adopted as long as a predetermined condition is satisfied.

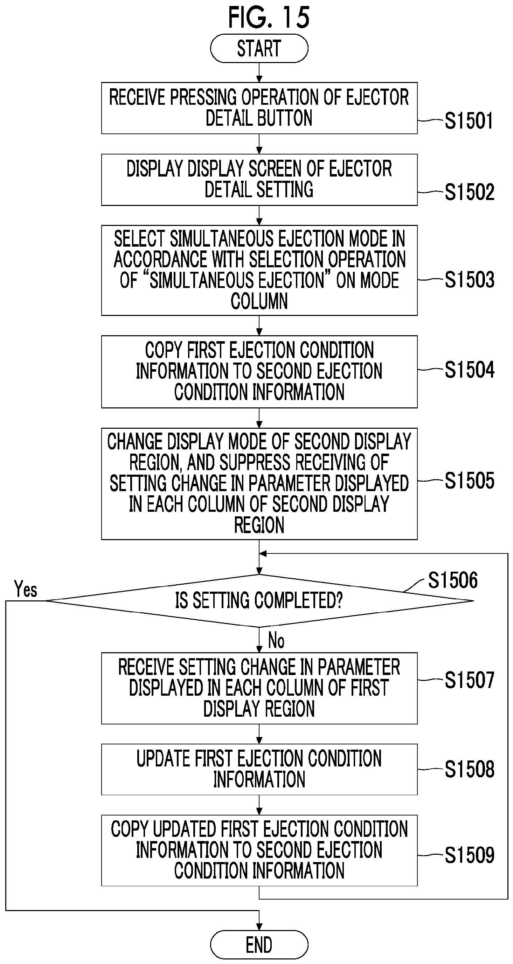

FIG. 15 is a flowchart illustrating a setting process when the simultaneous ejection mode is selected in the control device 700 according to the embodiment.

First, the input receiving unit 711 receives pressing of the ejector detail button 1301 via the operation unit 750 (S1501).

Next, the display processing unit 712 displays a display screen relating to ejector detail setting, based on the pressing of the ejector detail button 1301 (S1502).

The selection unit 715 selects the simultaneous ejection mode in accordance with the selection operation of "Simultaneous Ejection" on the mode column 1311A by the input receiving unit 711 (S1503).

The condition processing unit 716 copies the first ejection condition information 721 to the second ejection condition information 722 (S1504).

The display processing unit 712 changes the display mode of the second display region 1402B indicating the second ejection condition (for example, the background color or the character color is changed), and the input receiving unit 711 suppresses receiving the setting change in the parameter indicated in each column of the second display region 1402B (S1505).

Then, the control unit 717 determines whether or not the setting is completed (S1506). When it is determined that the setting is not completed (S1506: No), the input receiving unit 711 receives the setting change in the parameter indicated in each column of the first display region 1302A (S1507).

The first setting unit 713 updates the first ejection condition information 721 with the parameter in which the setting is changed (S1508).

The condition processing unit 716 copies the updated first ejection condition information 721 to the second ejection condition information 722 (S1509). Thereafter, the control unit 717 determines again whether or not the setting is completed (S1506). When it is determined that the setting is completed (S1506: Yes), the process ends.

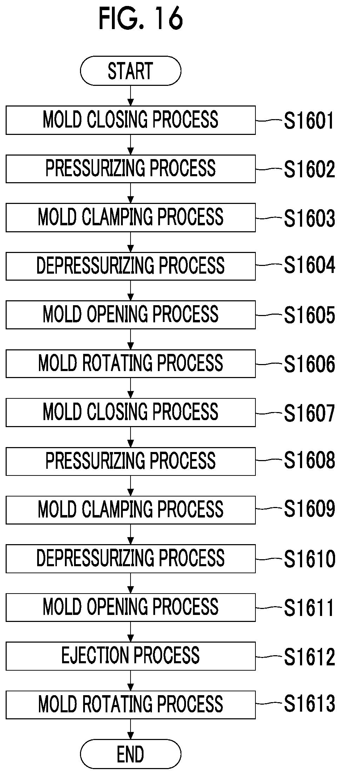

Next, the control performed on the mold clamping unit 100, the first ejector unit 201, and the second ejector unit 202 by the control device 700 according to the present embodiment when forming the molding product will be described. FIG. 16 is a flowchart illustrating each process relating to the control performed on the mold clamping unit 100 by the control device 700 according to the embodiment.

First, the control unit 717 drives the mold clamping motor 160, and advances the movable platen 120 by performing the control to advance the crosshead 151 to a mold closing completion position at a set movement speed. In this manner, the control unit 717 causes the movable die 820 touch the stationary die 810, and performs the mold closing process (S1601).

The control unit 717 further performs drive control on the mold clamping motor 160, further advances the crosshead 151 from the mold closing completion position to a mold clamping position, and performs the pressurizing process (S1602).

The control unit 717 drives the mold clamping motor 160 to maintain a position of the crosshead 151 at the mold clamping position, and performs the mold clamping process (S1603).

The control unit 717 performs the drive control on the mold clamping motor 160 to be driven, and retreats the crosshead 151 from the mold clamping position to a mold opening start position. In this manner, the movable platen 120 is retreated to reduce a mold clamping force, and performs the depressurizing process (S1604).

Next, the control unit 717 retreats the movable platen 120 from the mold opening start position to the mold opening completion position, separates the movable die 820 from the stationary die 810, and performs the mold opening process (S1605).

The control unit 717 performs rotation control on the rotary table 190, rotates the first molding product 21 together with the movable die 820, and performs the mold rotating process (S1606).

Next, the control unit 717 drives the mold clamping motor 160 again, and performs the control to advance the crosshead 151 to the mold closing completion position at the set movement speed, thereby performing the mold closing process (S1607).

The control unit 717 further performs the drive control on the mold clamping motor 160 to further advance the crosshead 151 from the mold closing completion position to the mold clamping position, and performs the pressurizing process (S1608).

The control unit 717 drives the mold clamping motor 160 to maintain a position of the crosshead 151 at the mold clamping position, and performs the mold clamping process (S1609).

The control unit 717 performs the drive control on the mold clamping motor 160 to retreat the crosshead 151 from the mold clamping position to the mold opening start position, thereby performing the depressurizing process (S1610).

The control unit 717 retreats the crosshead 151 from the mold opening start position to the mold opening completion position, thereby performing the mold opening process (S1611).

The control unit 717 regards the retreat from the mold opening start position to the mold opening completion position as a trigger, and performs the ejection control on the first ejector rod 211 of the first ejector unit 201 in accordance with the first ejection condition information 721, and performs the ejection control on the second ejector rod 212 of the second ejector unit 202 in accordance with the second ejection condition information 722, thereby performing the ejection process (S1612). In addition, when the first ejection condition information 721 is copied to the second ejection condition information 722, the first ejector unit 201 and the second ejector unit 202 perform the simultaneous ejection operation, and for example, a second elongated molding product (example of the same molding product) 22 is ejected.

The control unit 717 performs the rotation control on the rotary table 190, rotates the movable die 820, and performs the mold rotating process (S1613).

In the present embodiment, the first cavity space 801 is filled with the first molding material of the first molding product 21, and thereafter, the depressurizing process, the mold opening process, and the mold rotating process are performed. In this manner, the first molding product 21 formed of the first molding material moves to the second cavity space 802. Thereafter, the mold opening process is performed from the mold closing process. In this manner, in the second cavity space 802, the first molding product 21 is filled with the second molding material to form the second molding product 22, and the first molding product 21 is newly formed in the first cavity space 801. Then, the control unit 717 performs the ejection control only for the second molding product 22. The present embodiment is not limited to this method, and other methods may be used.

### Modification Example

In the above-described embodiment, the first ejector unit 201 and the second ejector unit 202 are disposed at an interval in the Y-axial direction, and the second molding product 22 elongated in the Y-axial direction is ejected from the movable die 820. However, the present invention is not limited thereto. The first ejector unit 201 and the second ejector unit 202 may be disposed at an interval in the Z-axial direction, and the second molding product 22 elongated in the Z-axial direction may be ejected from the movable die 820.

In the above-described embodiment, the first cavity space 801 and the second cavity space 802 are disposed at an interval in the Z-axial direction. However, the present invention is not limited thereto. The first cavity space 801 and the second cavity space 802 may be disposed at an interval in the Y-axial direction.

In the above-described embodiment, the stationary die 810 corresponds to the first die described in the appended claims, and the movable die 820 corresponds to the second die described in the appended claims. However, the present invention is not limited thereto. The stationary die 810 may correspond to the second die described in the appended claims, and the movable die 820 may correspond to the first die described in the appended claims.

In the above-described embodiment, an example has been described in which the setting change in the parameter of each column of the first display region is allowed and the setting change in the parameter of each column of the second display region is suppressed, when the simultaneous ejection mode is selected. However, the present invention is not limited thereto. According to the invention, the setting change in the parameter of each column of the second display region for performing the ejection control of the second ejector unit 202 is allowed, and the setting change in the parameter of each column of the first display region for performing the ejection control of the first ejector unit 201 is suppressed.

In the above-described embodiment, the rotary table 190 is used, but the rotary table 190 may not be used. In this case, the second die is attached to the second platen without using the rotary table. When the first ejector unit 201 and the second ejector unit 202 eject the same molding product from the second die, deformation of the molding product can be suppressed, and damage to the molding product can be suppressed.

In the above-described embodiment, the first injection unit 301 and the second injection unit 302 are used, but the number of the injection units may be one. When the first ejector unit 201 and the second ejector unit 202 eject the same molding product from the second die, deformation of the molding product can be suppressed, and damage to the molding product can be suppressed. The number of the injection units may be three or more.

According to the injection molding machine 10 of the above-described embodiment, there are various parameters in order to perform proper ejection control when the molding product is unloaded. The simultaneous ejection is required when the elongated molding product is unloaded. Accordingly, the parameter included in the first ejection condition for performing the ejection control of the first ejector unit 201 and the parameter included in the second ejection condition for performing the ejection control of the second ejector unit 202 need to coincide with each other. In the present embodiment, when the simultaneous ejection mode (example of the first mode) is selected, the first ejection condition information 721 is copied to the second ejection condition information 722. In this manner, the ejection control can be performed on the first ejector unit 201 and the second ejector unit 202 under the same ejection condition. In this way, the setting error or the setting forgetting can be suppressed by individually setting the first ejector unit 201 and the second ejector unit 202.

Furthermore, according to the injection molding machine 10 of the above-described embodiment, the ejection control is performed on the first ejector unit 201 and the second ejector unit 202 for the same molding product under the same ejection condition. In this manner, a difference in the ejection operations between the first ejector unit 201 and the second ejector unit 202 can be suppressed. Therefore, a load applied to the molding product and the mold unit can be reduced. The difference in the ejection operations of a plurality of the ejector units can be suppressed. Therefore, it is possible to reduce a possibility that the molding product may be damaged or a possibility that the mold unit may be damaged due to the load applied to the mold unit from the ejector pin penetrating the mold unit.

Hitherto, the embodiments of the injection molding machine according to the present invention have been described. However, the present invention is not limited to the above-described embodiments. Various modifications, corrections, substitutions, additions, deletions, and combinations can be made within the scope of the present invention which is defined by the appended claims.

### Brief Description of the Reference Symbols

- 10:: injection molding machine
- 700:: control device
- 702:: storage medium
- 711:: input receiving unit
- 712:: display processing unit
- 713:: first setting unit
- 714:: second setting unit
- 715:: selection unit
- 716:: condition processing unit
- 717:: control unit
- 721:: first ejection condition information
- 722:: second ejection condition information

## Claims

1. An injection molding machine (10) comprising:
a first ejector unit (201) configured to eject a molding product molded in cavity spaces (801, 802) formed between a first die (810) and a second die (820), from the second die (820);
a second ejector unit (202) configured to eject the molding product molded in the cavity spaces (801, 802) formed between the first die (810) and the second die (820), from the second die (820); and
a control device (700) configured to control the first ejector unit (201) and control the second ejector unit (202),
**characterized in that**
the control device (700) includes
a first setting unit (713) configured to set a first ejection condition for controlling the first ejector unit (201),
a second setting unit (714) configured to set a second ejection condition for controlling the second ejector unit (202),
a control unit (717) configured to control the first ejector unit (201) under the first ejection condition and control the second ejector unit (202) under the same condition as the first ejection condition, for the same molding product, when a predetermined condition is satisfied, and
a display processing unit (712) configured to perform display in a state where a setting change in the first ejection condition is allowed and a setting change in the second ejection condition is suppressed, or to perform display in a state where a setting change in the second ejection condition is allowed and a setting change in the first ejection condition is suppressed, when the predetermined condition is satisfied.

2. The injection molding machine (10) according to claim 1,
wherein the control device (700) further includes a selection unit (715) configured to select a first mode in which the first ejector unit (201) and the second ejector unit (202) perform an ejection operation in synchronization with each other, and
the control unit (717) controls the second ejector unit (202) under the same condition as the first ejection condition when the first mode is selected by the selection unit (715).

3. The injection molding machine (10) according to claim 1 or 2,
wherein the control device (700) further includes a condition processing unit (716) configured to copy the first ejection condition set by the first setting unit (713) to the second ejection condition, when the predetermined condition is satisfied, and
the control unit (717) controls an ejection operation of the second ejector unit (202) under the second ejection condition to which the first ejection condition is copied, when the predetermined condition is satisfied.

4. The injection molding machine (10) according to claim 3,
wherein the condition processing unit (716) includes one or more of a timing for starting ejection control, an ejection position, an ejection speed, and an ejection pressure, as the first ejection condition copied to the second ejection condition and set by the first setting unit (713) .

5. The injection molding machine (10) according to claim 3 or 4,
wherein the control device (700) further includes a receiving unit (711) configured to receive a setting change for the first ejection condition, and
the condition processing unit (716) copies the first ejection condition whose setting is changed to the second ejection condition, when the predetermined condition is satisfied, and when the receiving unit (711) receives the setting change for the first ejection condition.

## Patentansprüche

1. Spritzgießmaschine (10), umfassend:
eine erste Auswerfereinheit (201), die konfiguriert ist, ein in zwischen einer ersten Form (810) und einer zweiten Form (820) gebildeten Kavitätsräumen (801, 802) geformtes Formprodukt aus der zweiten Form (820) auszuwerfen;
eine zweite Auswerfereinheit (202), die konfiguriert ist, das in den zwischen der ersten Form (810) und der zweiten Form (820) gebildeten Kavitätsräumen (801, 802) geformte Formprodukt aus der zweiten Form (820) auszuwerfen; und
eine Steuervorrichtung (700), die konfiguriert ist, die erste Auswerfereinheit (201) zu steuern und die zweite Auswerfereinheit (202) zu steuern,
**dadurch gekennzeichnet, dass**
die Steuervorrichtung (700) umfasst
eine erste Einstelleinheit (713), die konfiguriert ist, eine erste Auswurfbedingung zum Steuern der ersten Auswerfereinheit (201) einzustellen,
eine zweite Einstelleinheit (714), die konfiguriert ist, eine zweite Auswurfbedingung zum Steuern der zweiten Auswerfereinheit (202) einzustellen,
eine Steuereinheit (717), die konfiguriert ist, die erste Auswerfereinheit (201) unter der ersten Auswurfbedingung zu steuern und die zweite Auswerfereinheit (202) unter der gleichen Bedingung wie der ersten Auswurfbedingung für das gleiche Formprodukt zu steuern, wenn eine vorbestimmte Bedingung erfüllt ist, und
eine Anzeigeverarbeitungseinheit (712), die konfiguriert ist, Anzeige in einem Zustand durchzuführen, in dem eine Einstellungsänderung bei der ersten Auswurfbedingung erlaubt ist und eine Einstellungsänderung bei der zweiten Auswurfbedingung unterdrückt wird, oder Anzeige in einem Zustand durchzuführen, bei dem eine Einstellungsänderung in der zweiten Auswurfbedingung erlaubt ist und eine Einstellungsänderung in der ersten Auswurfbedingung unterdrückt wird, wenn die vorbestimmte Bedingung erfüllt ist.

2. Spritzgießmaschine (10) nach Anspruch 1,
wobei die Steuervorrichtung (700) ferner eine Auswahleinheit (715) enthält, die konfiguriert ist, einen ersten Modus auszuwählen, bei dem die erste Auswerfereinheit (201) und die zweite Auswerfereinheit (202) einen Auswurfvorgang synchron miteinander durchführen, und
die Steuereinheit (717) die zweite Auswurfeinheit (202) unter der gleichen Bedingung wie die erste Auswurfbedingung steuert, wenn der erste Modus von der Auswahleinheit (715) ausgewählt wird.

3. Spritzgießmaschine (10) nach Anspruch 1 oder 2,
wobei die Steuervorrichtung (700) ferner eine Bedingungsverarbeitungseinheit (716) enthält, die konfiguriert ist, die von der ersten Einstelleinheit (713) eingestellte erste Auswurfbedingung in die zweite Auswurfbedingung zu kopieren, wenn die vorbestimmte Bedingung erfüllt ist, und
die Steuereinheit (717) einen Auswurfvorgang der zweiten Auswerfereinheit (202) unter der zweiten Auswurfbedingung steuert, in die die erste Auswurfbedingung kopiert wird, wenn die vorbestimmte Bedingung erfüllt ist.

4. Spritzgießmaschine (10) nach Anspruch 3,
wobei die Zustandsverarbeitungseinheit (716) einen oder mehrere Zeitpunkte zum Starten von Auswurfsteuerung, eine Auswurfposition, eine Auswurfgeschwindigkeit und einen Auswurfdruck enthält, die als die erste Auswurfbedingung in die zweite Auswurfbedingung kopiert wird und von der ersten Einstelleinheit (713) eingestellt wird.

5. Spritzgießmaschine (10) nach Anspruch 3 oder 4,
wobei die Steuervorrichtung (700) ferner eine Empfangseinheit (711) umfasst, die konfiguriert ist, eine Einstellungsänderung für die erste Auswurfbedingung zu empfangen, und
die Bedingungsverarbeitungseinheit (716) die erste Auswurfbedingung kopiert, deren Einstellung in die zweite Auswurfbedingung geändert wird, wenn die vorbestimmte Bedingung erfüllt ist, und wenn die Empfangseinheit (711) die Einstellungsänderung für die erste Auswurfbedingung empfängt.

## Revendications

1. Une machine de moulage par injection (10) comprenant
une première unité d'éjecteur (201) conçue pour éjecter un produit de moulage moulé dans des espaces de cavité (801, 802) formés entre une première matrice (810) et une deuxième matrice (820), hors de la deuxième matrice (820) ;
une deuxième unité d'éjecteur (202) conçue pour éjecter un produit de moulage moulé dans des espaces de cavité (801, 802) formés entre une première matrice (810) et une deuxième matrice (820), hors de la deuxième matrice (820) ; et
un dispositif de commande (700) conçu pour contrôler la première unité d'éjecteur (201) et pour contrôler la deuxième unité d'éjecteur (202),
**caractérisée en ce que**
le dispositif de commande (700) comprend
une première unité de réglage (713) conçue pour régler un premier état d'éjection pour le contrôle de la première unité d'éjecteur (201),
une deuxième unité de réglage (714) conçue pour régler un deuxième état d'éjection pour le contrôle de la deuxième unité d'éjecteur (202),
une unité de commande (717) conçue pour contrôler la première unité d'éjecteur (201) dans le premier état d'éjection et la deuxième unité d'éjecteur (202 dans le même état que le premier état d'éjection, pour le même produit de moulage, lorsqu'un état prédéterminé est satisfait et
une unité de traitement d'affichage (712) conçue pour effectuer un affichage dans un état dans lequel un changement de réglage dans le premier état d'éjection est autorisé et un change de réglage dans le deuxième état d'éjection est supprimé ou pour effectuer un affichage dans un état dans lequel un changement de réglage dans le deuxième état d'éjection est autorisé et un changement de réglage dans le premier état d'éjection est supprimé, lorsque l'état prédéterminé est satisfait.

2. La machine de moulage par injection (10) selon la revendication 1,
dans laquelle le dispositif de commande (700) comprend en outre une unité de sélection (715) conçue pour sélectionner un premier mode dans lequel la première unité d'éjecteur (201) et la deuxième unité d'éjecteur (202) effectuent une opération d'éjection en synchronisation entre elles et
l'unité de commande (717) contrôle la deuxième unité d'éjecteur (202) dans le même état que le premier état d'éjection lorsque le premier mode est sélectionné par l'unité de sélection (715).

3. La machine de moulage par injection (10) selon la revendication 1 ou 2,
dans laquelle le dispositif de commande (700) comprend en outre une unité de traitement d'état (716) conçue pour copier le premier état d'éjection réglé par la première unité de réglage (713) dans le deuxième état d'éjection, lorsque l'état prédéterminé est satisfait et
l'unité de commande (717) contrôle une opération d'éjection de la deuxième unité d'éjecteur (202) dans le deuxième état d'éjection dans lequel le premier état d'éjection est copié, lorsque l'état prédéterminé est satisfait.

4. La machine de moulage par injection (10) selon la revendication 3,
dans laquelle l'unité de traitement d'état (716) comprend un ou plusieurs éléments parmi un timing pour le démarrage du contrôle d'éjection, une position d'éjection, une vitesse d'éjection et une pression d'éjection, en tant que premier état d'éjection copié dans le deuxième état d'éjection et réglé par la première unité de réglage (713).

5. La machine de moulage par injection (10) selon la revendication 3 ou 4,
dans laquelle le dispositif de commande (700) comprend en outre une unité de réception (711) conçue pour recevoir et régler un changement pour le premier état d'éjection et
l'unité de traitement d'état (716) copie le premier état d'éjection dont le réglage est changé dans le deuxième état d'éjection, lorsque l'état prédéterminé est satisfait et lorsque l'unité de réception (711) reçoit le changement de réglage pour le premier état d'éjection.
